# EUROPEAN PATENT SPECIFICATION

(11) **EP 0 812 982 B1**
(45) Date of publication and mention of the grant of the patent: **15.10.2003**
(21) Application number: 97108796.0
(22) Date of filing: 02.06.1997
(51) Int. Cl.: F02D 41/40, F02D 41/06

(54) **Fuel injection control apparatus of an electronic controlled diesel engine**
Kraftstoffeinspritzungssteuergerät für einen elektronisch geregelten Dieselmotor
Dispositif de commande d'injection de carburant pour moteur diesel commandé électroniquement

(30) Priority: 11.06.1996 JP 14940996
(43) Date of publication of application: 17.12.1997
(73) Proprietor: TOYOTA JIDOSHA KABUSHIKI KAISHA, Aichi-ken (JP)
(72) Inventor: Itoh, Yoshiyasu, Toyota-shi, Aichi-ken (JP)
(74) Representative: Leson, Thomas Johannes Alois, Dipl.-Ing.

(56) References cited:
- EP-A- 0 684 372
- EP-A- 0 697 511
- US-A- 4 785 771
- PATENT ABSTRACTS OF JAPAN vol. 008, no. 276 (M-346), 18 December 1984 (1984-12-18) & JP 59 147831 A (TOYOTA JIDOSHA KK), 24 August 1984 (1984-08-24)

## Description

### BACKGROUND OF THE INVENTION

### (1) Field of the Invention

The present invention generally relates to a fuel injection control apparatus of a diesel engine, and more particularly to a fuel injection control apparatus which provides a good starting ability and good exhaust characteristics of the diesel engine by controlling a spill valve at the time of cranking of the diesel engine.

### (2) Description of the Related Art

A fuel injection control apparatus which has been proposed for an electronic controlled diesel engine by the applicant of the present invention is known. The fuel injection control apparatus includes a fuel injection pump, a spill valve, and an NE pulser. The diesel engine is provided with an electronic control unit. The fuel injection pump produces high-pressure fuel in a high-pressure chamber of the pump in accordance with a rotation angle of a crankshaft of the engine. The spill valve is arranged in a passage connected to the high-pressure chamber and is opened or closed by the control unit. The NE pulser outputs a pulse signal to the control unit in response to a change in the rotation angle of the crankshaft.

In the above-mentioned fuel injection control apparatus, when the spill valve is opened by the control unit so that the high-pressure chamber is open to a low-pressure chamber of the fuel injection pump, high-pressure fuel in the high-pressure chamber is not produced. In the opened condition of the spill valve, the fuel from the fuel injection pump is not injected to the engine even if the fuel injection pump is operated. When the spill valve is closed by the control unit so that the high-pressure chamber is isolated from the low-pressure chamber by the spill valve, the fuel injection pump produces the high-pressure fuel in the high-pressure chamber. In the closed condition of the spill valve, the fuel from the fuel injection pump is injected to the engine in accordance with the rotation angle of the crankshaft of the engine.

In the above-mentioned fuel injection control apparatus, the control unit executes a fuel injection control routine so that opening and closing operations of the spill valve are suitably performed. According to the fuel injection control routine, the fuel from the fuel injection pump is injected to the diesel engine at appropriate timings in accordance with the rotation angle of the crankshaft.

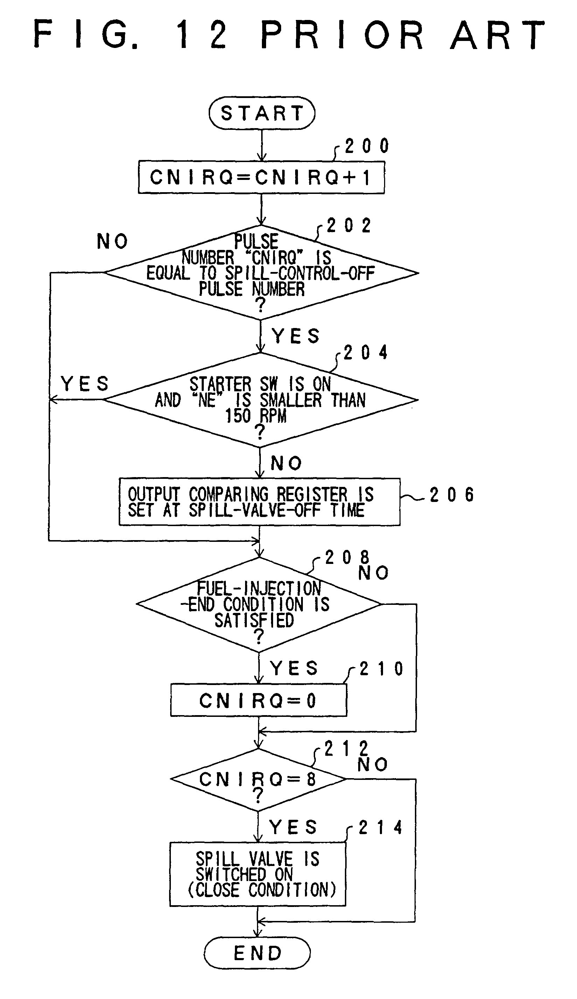

FIG.12 shows a fuel injection control routine executed by the above-mentioned fuel injection control apparatus. This routine is an interrupt routine which is started by the control unit each time one pulse signal from the NE pulser is supplied to the control unit. This routine is executed such that the spill valve is periodically switched ON (the closed condition) each time the rotation angle of the crankshaft is equal to a rotation angle related to a fuel-injection-start time of a corresponding one of the cylinders of the engine, and the spill valve is periodically switched OFF (the opened condition) each time the rotation angle of the crankshaft is equal to a rotation angle related to a fuel-injection-end time at which the fuel injection for the corresponding cylinder of the engine is to be finished.

When the control routine of FIG.12 is started, the control unit at step 200 increments a pulse-signal counter CNIRQ (CNIRQ = CNIRQ + 1). The counter CNIRQ indicates the number of the pulse signals output to the control unit by the NE pulser. The number of the pulse signals output to the control unit will be called the pulse number.

Step 202 detects whether the pulse number indicated by the counter CNIRQ is equal to a spill-control-off pulse number. The spill-control-off pulse number is determined based on the fuel-injection-end time at which the fuel injection for one of the cylinders of the engine is to be finished. When the time at which the NE pulser presently outputs the pulse signal is nearest to the fuel-injection-end time, the pulse number indicated by the counter CNIRQ is detected to be equal to the spill-control-off pulse number.

When the result at the step 202 is affirmative, step 204 is performed. When the result at the step 202 is negative, step 208 is performed.

Step 204 detects whether a starter switch (STA) is in the ON state and an engine speed (NE) is less than 150 rpm (revolutions per minute). When the result at the step 204 is negative, it is determined that the diesel engine is not in a cranking condition. At this time, step 206 is performed.

Step 206 sets an output comparing register at a spill-valve-off time. When the present time is equal to the spill-valve-off time of the output comparing register after the step 206 is performed, the spill valve is switched OFF (or it is set in the opened condition) by the control unit. After the step 206 is performed, step 208 is performed.

When the result at the step 204 is affirmative, it is determined that the diesel engine is in the cranking condition but the engine speed NE is not sufficiently high. In other words, it is determined that the cranking of the diesel engine is not suitably performed. At this time, step 208 is performed and the above step 206 is not performed. Since the output comparing register is not set at the spill-valve-off time, the spill valve is not switched OFF by the control unit at this time.

Step 208 detects whether the pulse signal presently output by the NE pulser satisfies a fuel-injection-end condition related to the fuel-injection-end time. When the result at the step 208 is affirmative, step 210 is performed. Step 210 resets the counter CNIRQ to zero. When the result at the step 208 is negative, step 212 is performed and the above step 210 is not performed.

Step 212 detects whether the value of the counter CNIRQ is equal to a reference number (for example, 8). This reference number "8" is indicated by the counter CNIRQ when the rotation angle of the crankshaft of the engine reaches a rotation angle related to a spill-control-on pulse number at which the spill valve is to be switched ON (or it is to be set in the closed condition).

When the result at the step 212 is affirmative (CNIRQ = 8), step 214 is performed. Step 214 switches ON the spill valve (or sets it in the closed condition). After the step 214 is performed, the fuel injection control routine at the present cycle is finished.

When the result at the step 212 is negative, the above step 214 is not performed and the fuel injection control routine at the present cycle is finished.

According to the fuel injection control routine of FIG.12, it is possible to periodically switch ON the spill valve each time the value of the counter CNIRQ is equal to the reference number "8" during the operation of the diesel engine.

In the above-mentioned fuel injection control apparatus, the spill valve is periodically switched ON (the closed condition) each time the value of the counter CNIRQ is equal to the reference number "8". If the diesel engine is in the cranking condition and the engine speed (NE) is higher than 150 rpm, the spill valve which has been set in the ON state is switched OFF (the opened condition) immediately after the pulse number indicated by the counter CNIRQ is detected to be equal to a spill-control-off pulse number. If the diesel engine is in the cranking condition and the engine speed (NE) is less than 150 rpm, the spill valve which has been set in the ON state is maintained and it is not switched OFF.

When the spill valve in the ON state (the closed condition) is maintained, a full amount of fuel from the fuel injection pump is injected to the diesel engine and no fuel is spilled from the fuel injection pump through the spill valve. Hereinafter, this operation of the fuel injection pump will be called the injection of the full amount of fuel.

Generally, when the injection of the full amount of fuel is performed with the fuel injection pump, a large amount of fuel from the fuel injection pump is supplied to the diesel engine and the starting ability of the engine is increased. Therefore, under circumstances where it is difficult to start the diesel engine, it is desirable to perform the injection of the full amount of fuel with the fuel injection pump. However, if the injection of the full amount of fuel is performed, a large amount of fuel from the fuel injection pump is supplied to the diesel engine and the exhaust characteristics of the engine becomes worse. Therefore, under circumstances where the cranking of the diesel engine can be easily performed, it is desirable to inhibit the performance of the injection of the full amount of fuel, in order to provide good exhaust characteristics of the engine.

In the above-mentioned fuel injection control apparatus, when the diesel engine is in the cranking condition and the engine speed (NE) is higher than 150 rpm, the spill valve in the ON state is switched OFF (the opened condition). That is, when the cranking of the diesel engine can be easily performed, the injection of the full amount of fuel is not performed. On the other hand, when the diesel engine is in the cranking condition and the engine speed (NE) is less than 150 rpm, the spill valve in the ON state (the closed condition) is maintained. That is, when it is difficult to start the diesel engine, the injection of the full amount of fuel is performed with the fuel injection pump.

In the control unit of the above-mentioned diesel engine, the engine speed (NE) is computed based on on the average engine speed during a period in which the maximum value of the counter CNIRQ (which is equal to 13) is reached after the counter CNIRQ is reset to zero. According to this method of computing the engine speed, a correct value of the engine speed cannot be determined until the maximum value of the counter CNIRQ is reached after the start of cranking of the diesel engine. The period during which the correct value of the engine speed (NE) cannot be determined is called the NE non-computation period.

In the control unit of the above-mentioned diesel engine, the engine speed (NE) is determined as being zero during the NE non-computation period. For this reason, the above-mentioned fuel injection control apparatus has a problem in that the injection of the full amount of fuel during the NE non-computation period may be unnecessarily performed.

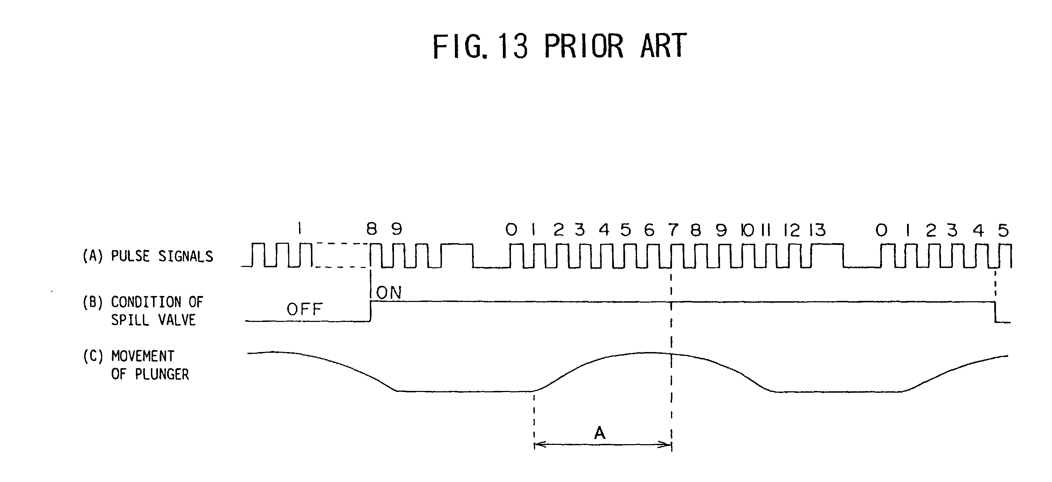

FIG.13 is a timing chart for explaining an operation of the above-mentioned fuel injection control apparatus immediately after the start of cranking of the diesel engine. In the upper portion (A) of FIG.13, pulse signals output from the NE pulser are indicated, and reference numerals indicate each pulse number of the pulse signals. The number of the pulse signals is counted by using the counter CNIRQ. In the middle portion (B) of FIG.13, a change of a control signal output to the spill valve is indicated. In the lower portion (C) of FIG.13, a change of movement of a plunger of the fuel injection pump is indicated.

As shown in FIG.13, the value of the counter CNIRQ is equal to the reference number "8" before the fuel-injection-end condition is satisfied by the pulse signal for the first time after the diesel engine is started. In the above-mentioned fuel injection control apparatus, the spill valve in the OFF state is switched ON (the closed condition) when the condition CNIRQ = 8 is satisfied by the pulse signal output by the NE pulser. After a predetermined time period, the spill valve is switched OFF (the opened condition).

In the above-mentioned fuel injection control apparatus, when the pulse number indicated by the counter CNIRQ is around "4" to "6", it is determined that the pulse number is equal to the spill-control-off pulse number. However, the control unit of the above-mentioned diesel engine determines the engine speed (NE) as being zero during the NE non-computation period. When it is detected that the diesel engine is in the cranking condition and the engine speed (NE) is less than 150 rpm, the switching OFF of the spill valve is inhibited during the spill-control-off period.

As shown in FIG.13, when the condition CNIRQ = 8 is satisfied before the fuel-injection-end condition is satisfied for the first time after the diesel engine is started, the spill valve which has been set in the ON state is maintained for a long period. The ON state of the spill valve is continuously maintained until the fuel-injection-end condition is subsequently satisfied. If the ON state of the spill valve is continuously maintained, the injection of the full amount of fuel is performed during a period indicated by the arrow "A" in FIG.13.

As described above, if the engine speed (NE) is less than 150 rpm at the start of the above-mentioned period "A", the performance of the injection of the full amount of fuel with the fuel injection pump is desirable. However, if the engine speed (NE) is higher than 150 rpm at the start of the above-mentioned period "A", the performance of the injection of the full amount of fuel is not desirable because it is detrimental to the exhaust characteristics of the diesel engine. Therefore, the above-mentioned fuel injection control apparatus has the problem in that the injection of the full amount of fuel during the NE non-computation period may be unnecessarily performed. The above-mentioned fuel injection control apparatus is inadequate to provide good exhaust characteristics of the diesel engine at the time of cranking of the diesel engine.

### SUMMARY OF THE INVENTION

A general object of the present invention is to provide an improved fuel injection control apparatus in which the above-described problems are eliminated.

Another, more specific object of the present invention is to provide a fuel injection control apparatus which provides a good starting ability of the diesel engine when it is otherwise difficult to start the diesel engine.

Still another object of the present invention is to provide a fuel injection control apparatus which provides good exhaust characteristics of the diesel engine by preventing the injection of the full amount of fuel from being unnecessarily performed during a period from the start of cranking of the engine to the start of computation of the engine speed.

A further object of the present invention is to provide a fuel injection control apparatus which provides a good starting ability of the diesel engine as well as good exhaust characteristics of the diesel engine in accordance with an operating condition of the diesel engine.

The above-mentioned objects of the present invention are achieved by a fuel injection control apparatus of a diesel engine, which includes: a spill valve which opens or closes a high-pressure chamber of a fuel injection pump; a rotation angle sensing unit which senses a rotation angle of a crankshaft of the engine; a first unit which sets the spill valve in a closed condition each time the rotation angle sensed by the rotation angle sensing unit is equal to a spill-control-off rotation angle; a second unit which sets the spill valve in an opened condition when the rotation angle sensed by the rotation angle sensing unit is equal to a fuel-injection-end rotation angle; a third unit which inhibits the setting of the spill valve in the opened condition by the second unit when an engine speed during a cranking condition of the engine is less than a reference value; and a fourth unit which inhibits the setting of the spill valve in the closed condition by the first unit during a period from the start of cranking of the engine to the start of computation of the engine speed.

The above-mentioned objects of the present invention are achieved by a fuel injection control apparatus of a diesel engine, which includes: a spill valve which opens or closes a high-pressure chamber of a fuel injection pump; a rotation angle sensing unit which senses a rotation angle of a crankshaft of the engine; a first unit which sets the spill valve in a closed condition each time the rotation angle sensed by the rotation angle sensing unit is equal to a spill-control-off rotation angle; a second unit which sets the spill valve in an opened condition when the rotation angle sensed by the rotation angle sensing unit is equal to a fuel-injection-end rotation angle; a third unit which inhibits the setting of the spill valve in the opened condition by the second unit when an engine speed during a cranking condition of the engine is less than a reference value; and a fourth unit which computes a temporary engine speed based on an engine speed related to a predetermined rotation angle of the crankshaft, prior to the setting of the spill valve in the opened condition by the second unit, when the spill valve is set in the closed condition by the first unit during a period from the start of cranking of the engine to the start of computation of the engine speed. In this apparatus, when the temporary engine speed is computed by the fourth unit, the third unit makes a determination as to whether the setting of the spill valve is set in the opened condition is inhibited or allowed, based on the temporary engine speed.

According to the fuel injection control apparatus of the present invention, it is possible to prevent the injection of the full amount of fuel from being unnecessarily performed at the time of cranking of the diesel engine. Therefore, it is possible to provide good exhaust characteristics of the diesel engine. Further, it is possible to start the injection of the full amount of fuel immediately after the start of the cranking of the engine if the engine speed during the cranking condition of the engine is excessively low. If the engine speed during the cranking condition of the engine is sufficiently high, the performance of the injection of the full amount of fuel at the time of cranking of the engine is inhibited. Therefore, it is possible for the above-described embodiment to provide a good starting ability of the diesel engine as well as good exhaust characteristics of the diesel engine in accordance with an operating condition of the diesel engine.

### BRIEF DESCRIPTION OF THE DRAWINGS

The above and other objects, features and advantages of the present invention will be more apparent from the following detailed description when read in conjunction with the accompanying drawings in which:
FIG.1 is a diagram showing a diesel engine to which a fuel injection control apparatus in one embodiment of the present invention is applied;
FIG.2 is an enlarged view of a rotor of a fuel injection pump of FIG.1;
FIGS.3 and 4 are a flowchart for explaining a control routine executed by an electronic control unit of the diesel engine in a first embodiment of the present invention;
FIG.5 is a flowchart for explaining another control routine executed by the control unit of the first embodiment;
FIG.6 is a timing chart for explaining an operation of the fuel injection control apparatus of the present embodiment when the engine speed during the cranking condition of the engine is sufficiently high;
FIG.7 is a timing chart for explaining an operation of the fuel injection control apparatus of the present embodiment when the engine speed during the cranking condition of the engine is excessively low;
FIGS.8 and 9 are a flowchart for explaining a control routine executed by the control unit in a second embodiment of the present invention;
FIG.10 is a flowchart for explaining a fuel injection time computation routine executed by the control unit of the second embodiment;
FIG.11 is a timing chart for explaining an operation of the fuel injection control apparatus of the present embodiment when the engine speed during the cranking condition of the engine is sufficiently high;
FIG.12 is a flowchart for explaining a injection control routine executed by a conventional fuel injection control apparatus; and
FIG.13 is a timing chart for explaining an operation of the conventional fuel injection control apparatus.

### DESCRIPTION OF THE PREFERRED EMBODIMENTS

A description will now be given of the preferred embodiments of the present invention with reference to the accompanying drawings.

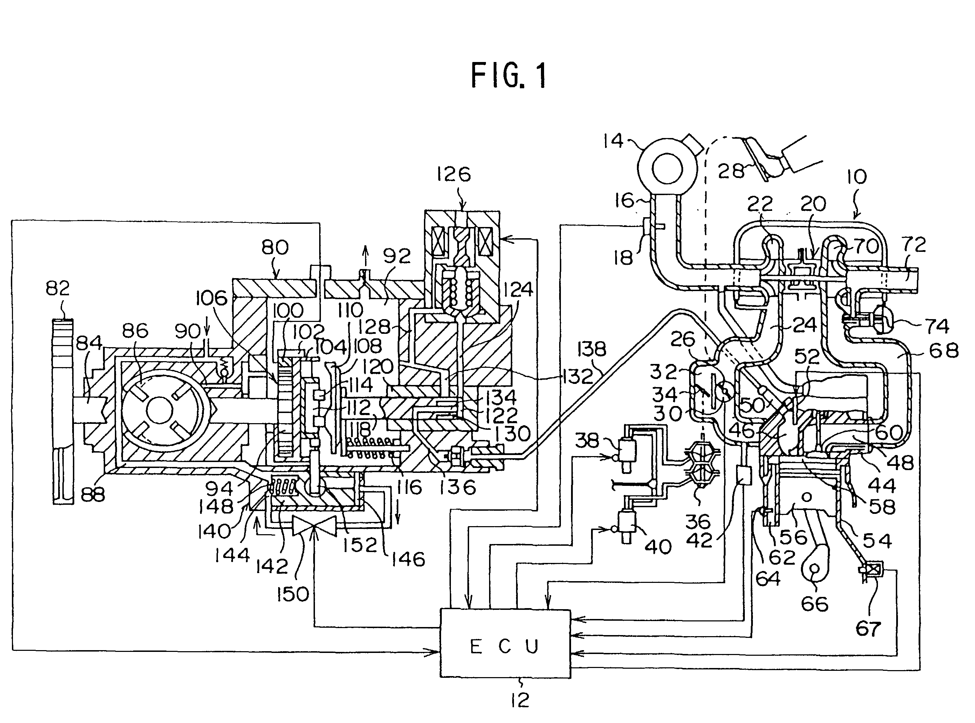

FIG.1 shows a diesel engine 10 having a turbocharger 20 to which a fuel injection control apparatus in one embodiment of the present invention is applied. The diesel engine 10 is an electronically controlled diesel engine which is capable of carrying out an electronic fuel injection control. The diesel engine 10 is controlled in accordance with a fuel injection control routine executed by an electronic control unit (ECU) 12.

As shown in FIG.1, the diesel engine 10 includes an air filter 14. The air filter 14 has an inlet leading to the atmosphere and an outlet connected to an intake pipe 16. An air temperature sensor 18 is provided within the intake pipe 16, and the air temperature sensor 18 senses a temperature of intake air passing through the intake pipe 16. A signal output from the air temperature sensor 18 is supplied to the ECU 12, and the ECU 12 detects a temperature (THA) of intake air based on the signal from the air temperature sensor 18.

The intake pipe 16 is connected to a compressor of the turbocharger 20 so that the intake pipe 16 communicates with a compressor chamber 22 of the turbocharger 20. A downstream side of the compressor chamber 22 is connected to an intake passage 24 so that the compressor chamber 22 communicates with the intake passage 24. An intake throttle valve 26 is arranged within the intake passage 24. The intake throttle valve 26 is opened or closed in accordance with a position of an accelerator pedal 28 being set by a vehicle operator. A throttle opening angle sensor 30 is arranged adjacent to the intake throttle valve 26, and the throttle opening angle sensor 30 senses an opening angle of the throttle valve 26. A signal output from the throttle opening angle sensor 30 is supplied to the ECU 12, and the ECU 12 detects an opening angle of the throttle valve 26 based on the signal from the throttle opening angle sensor 30. Thus, the ECU 12 detects a position of the accelerator pedal 28 from the opening angle of the throttle valve 26.

A bypass passage 32 is provided in the intake passage 24, and the bypass passage 32 bypasses the intake throttle valve 26 in the intake passage 24. A bypass throttle valve 34 is arranged within the bypass passage 32. A negative-pressure actuator 36 is connected to the bypass throttle valve 34. A vacuum switching valve (VSV) 38 and a vacuum switching valve (VSV) 40 are connected to the negative-pressure actuator 36 such that the VSV 38 and the VSV 40 communicate with the negative-pressure actuator 36.

The VSV 38 and the VSV 40 are controlled by the ECU 12 in accordance with the operating condition of the diesel engine 10, so that the bypass throttle valve 34 is set at a controlled position through the negative-pressure actuator 36. More specifically, when the diesel engine 10 stops operation, the ECU 12 controls the VSV 38 and the VSV 40 so that the bypass throttle valve 34 is set at a fully closed position. When the diesel engine 10 operates in an idling condition, the ECU 12 controls the VSV 38 and the VSV 40 so that the bypass throttle valve 34 is set at a half closed position. Further, when the diesel engine 10 operates in a normal condition, the ECU 12 controls the VSV 38 and the VSV 40 so that the bypass throttle valve 34 is set at a fully opened position.

An intake pressure sensor 42 is connected to a portion of the intake passage 24 on the downstream side of the intake throttle valve 26 or the bypass throttle valve 34. The intake pressure sensor 42 senses an internal pressure of the intake passage 24. A signal output from the intake pressure sensor 42 is supplied to the ECU 12, and the ECU detects a value of intake pressure in the intake passage 24 at the downstream side of the intake throttle valve 26 or the bypass throttle valve 34 based on the signal from the intake pressure sensor 42.

The diesel engine 10 includes a cylinder head 44 in which a sub-combustion chamber 46 and an exhaust port 48 are formed. The diesel engine 10 is a four-cylinder engine, and, in the cylinder head 44, the sub-combustion chamber 46 and the exhaust port 48 are provided for each of the four cylinders of the diesel engine 10.

Further, in the cylinder head 44, a fuel injector valve 50 and a glow plug 52 are arranged for each of the four cylinders of the diesel engine 10 such that the leading edges of the fuel injector valve 50 and the glow plug 52 project into the sub-combustion chamber 46. The glow plug 52 is a heating element for facilitating the start-up of the diesel engine 10, and the ECU 12 controls the heating of the glow plug 52.

The diesel engine 10 includes a cylinder block 54 in which a piston 56 moving up and down in one of the four cylinders is arranged. The diesel engine 10 includes four pistons 56 in the cylinder block 54 for the four cylinders thereof, but only one piston 56 included in the diesel engine 10 is shown in FIG.1, for the sake of simplicity. A main combustion chamber 58 between the bottom of the cylinder head 44 and the top of the piston 56 is formed. The sub-combustion chamber 46 and the exhaust port 48 communicate with the main combustion chamber 58. In the cylinder head 44, there is provided an exhaust valve 60 which opens and closes the exhaust port on the top of the main combustion chamber 58 in accordance with the rotation angle of the diesel engine 10.

A water jacket 62 is formed in the internal walls of the cylinder block 54. Engine cooling water is circulated in the water jacket 62 of the cylinder block 54. A water temperature sensor 64 is arranged in the water jacket 62 such that the leading edge of the water temperature sensor 64 projects into the water jacket 62. The water temperature sensor 64 senses a temperature (THW) of the engine cooling water in the diesel engine 10. A signal output from the water temperature sensor 64 is supplied to the ECU 12, and the ECU 12 detects a value of the temperature (THW) of the engine cooling water in the diesel engine 10 based on the signal from the water temperature sensor 64.

A crankshaft 66 is coupled to the piston 56 by a connecting rod (not shown). A reference position sensor 67 is arranged in the cylinder block 54 adjacent to the crankshaft 66. The reference position sensor 67 outputs a pulse signal to the ECU 12 when a rotation angle of the crankshaft 66 is equal to a reference rotation angle. The ECU 12 makes a determination that the rotation angle of the crankshaft 66 is equal to the reference rotation angle, when the pulse signal from the reference position sensor 67 is supplied to the ECU 12.

The diesel engine 10 includes an exhaust passage 68 which communicates with the exhaust port 48 of the cylinder head 44. The intake passage 24 and the exhaust passage 68 are mounted in the diesel engine 10, and the turbocharger 20 is arranged at the location where the intake passage 24 and the exhaust passage 68 join. The exhaust passage 68 communicates with a turbine chamber 70 of the turbocharger 20. An exhaust pipe 72 has an outlet leading to the atmosphere and an inlet connected to the downstream side of the turbine chamber 70 to which the exhaust passage 68 is connected.

Further, a waste gate valve 74 is arranged at the location between the exhaust passage 68 and the exhaust pipe 72. The waste gate valve 74 is opened when the pressure of the exhaust passage 68 is higher than a reference pressure value, and the exhaust passage 68 and the exhaust pipe 72 communicate with each other through the waste gate valve 74 which is in the opened condition.

In the diesel engine 10 shown in FIG.1, high-pressure fuel from a fuel injection pump 80 is supplied to the fuel injector valve 50 of the diesel engine 10 at a controlled time appropriate for the fuel injector valve 50 to inject the high-pressure fuel to the diesel engine 10. The high-pressure fuel from the fuel injector valve 50 is injected to the sub-combustion chamber 46 of the diesel engine 10.

As shown in FIG.1, the fuel injection pump 80 includes a drive pulley 82, and the drive pulley 82 is connected to the crankshaft 66 of the diesel engine 10 through a belt (not shown). The fuel injection pump 80 is operated by rotation of the drive pulley 82. The fuel injection pump 80 supplies the high-pressure fuel to the fuel injector valve 50 at a controlled time. When the fuel, the pressure of which exceeds a given pressure level, is supplied to the fuel injector valve 50, the fuel injector valve 50 injects the fuel into the sub-combustion chamber 46 of the diesel engine 10.

As described above, the fuel injector valve 50 is provided for each of the four cylinders of the diesel engine 10 but only one fuel injector valve 50 for one of the four cylinders of the diesel engine 10 is shown in FIG.1 for the sake of convenience.

The drive pulley 82 is connected to the inlet side of a drive shaft 84. A vane pump 86 is connected to an intermediate portion of the drive shaft 84. The vane pump 86 is operated by the drive torque transmitted to the drive shaft 84 through the drive pulley 82. Regarding the vane pump 86 in FIG.1, a cross-sectional view of the vane pump 86 is shown for the sake of convenience.

The vane pump 86 is arranged so that the vane pump 86 communicates with a low-pressure passage 88 and a fuel feeding passage 90. Fuel from a fuel tank (not shown) is supplied to the low-pressure passage 80. The fuel feeding passage 90 communicates with a fuel chamber 92 which is provided within the fuel injection pump 80. The vane pump 86 produces high-pressure fuel from the fuel flowing through the low-pressure passage 88, and supplies the high-pressure fuel to the fuel chamber 92 through the fuel feeding passage 90.

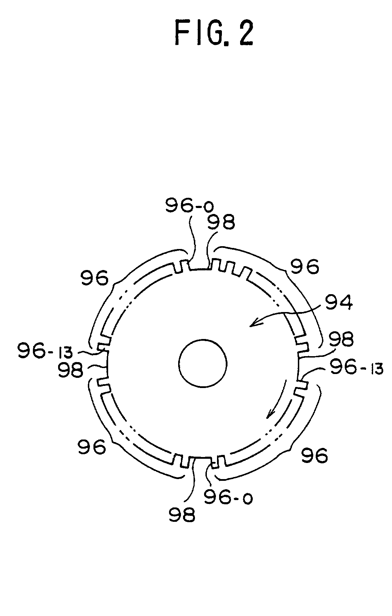

A rotor 94 is fitted to the outlet side of the drive shaft 84. FIG.2 shows the details of the rotor 94. As shown in FIG.2, the rotor 94 has four toothed portions 96 and four cut-out portions 98 on the outer periphery of the rotor 94. Each of the toothed portions 96 includes fourteen teeth 96-0 through 96-13 which are equally spaced within the toothed portion 96. The cut-out portions 98 between the toothed portions 96 are formed by cutting away corresponding teeth, and the cut-out portions 98 are equally spaced around the center of the rotor 94.

As shown in FIG.1, a pickup coil 100 is arranged above the top of the rotor 94. A magnet 102 is arranged on an upper portion of the pickup coil 100. The pickup coil 100 and the magnet 102 are secured to a holding member 104. A magnetic flux from the magnet 102 is applied to the rotor 94 through the pickup coil 100. When the rotor 94 having the toothed portions 96 and the cut-out portions 98 on the outer periphery thereof is rotated, the intensity of the magnetic flux at the pickup coil 100 varies in accordance with the rotation angle of the rotor 94. The speed of rotation of the rotor 94 is the same as the speed of rotation of the crankshaft 66 of the diesel engine 10. The pickup coil 100 produces a voltage signal proportional to a change in the intensity of the magnetic flux at the pickup coil 100.

The intensity of the magnetic flux at the pickup coil 100 increases when one of the teeth 96-0 through 96-13 in the toothed portions 96 of the rotor 94 passes the pickup coil 100 during the rotation of the rotor 94. The intensity of the magnetic flux at the pickup coil 100 decreases when a space between the teeth 96-0 through 96-13 in the toothed portions 96 of the rotor 94 or one of the cut-out portions 98 of the rotor 94 passes the pickup coil 100 during the rotation of the rotor 94. Accordingly, when one of the teeth 96-0 through 96-13 in the toothed portions 96 of the rotor 94 passes the pickup coil 100 during the rotation of the rotor 94, the pickup coil 100 outputs a pulse signal. Hereinafter, a rotation angle sensing unit which outputs a pulse signal indicative of a rotation angle of the crankshaft 66 during the rotation of the crankshaft 66 (or the rotation of the rotor 94) will be called an NE pulser 106. The NE pulser 106 is constituted by the rotor 94, the pickup coil 100, the magnet 102, and the holding member 104.

The number of the toothed portions 96 in the rotor 94 or the number of the cut-out portions 98 in the rotor 94 is the same as the number of the cylinders of the diesel engine 10. The pickup coil 100 and the rotor 94 are arranged such that the NE pulser 106 outputs a pulse signal in accordance with the rotation angle of the crankshaft 66 at a controlled time appropriate for each of the four cylinders of the diesel engine 10.

The pulse signal output from the NE pulser 106 is supplied to the ECU 12. When the pulse signal from the NE pulser 106 is supplied to the ECU 12 at predetermined periods, the ECU 12 makes a determination that the teeth 96-0 through 96-13 in the toothed portions 96 of the rotor 94 pass the pickup coil 100 during the rotation of the rotor 94. When the pulse signal from the NE pulser 106 is not supplied to the ECU 12 over an extended period, the ECU 12 makes a determination that the cut-out portions 98 of the rotor 94 pass the pickup coil 100 during the rotation of the rotor 94. When the pulse signal from the NE pulser 106 is again supplied to the ECU 12 after the extended period during which no pulse signal has been supplied, the ECU 12 makes a determination that the tooth 96-0 of the teeth 96-0 through 96-13 in the toothed portions 96 of the rotor 94 currently passes the pickup coil 100.

A cam plate 108 is connected to the outlet end of the drive shaft 84 through a coupling (not shown). The cam plate 108 has four cam faces 110 which are arranged on the peripheral surface of the cam plate 108 so that the cam faces 110 are spaced apart from each other around the center of the cam plate 108. A roller ring 112 is arranged between the rotor 94 and the cam plate 108. A plurality of cam rollers 114 on the peripheral surface of the roller ring 112 are attached to the roller ring 112 such that the cam rollers 114 oppose the cam faces 110. A spring 116 is arranged on the cam plate 108 such that the cam plate 108 is pushed to the cam rollers 114 by a biasing force of the spring 116, and the cam faces 110 and the cam rollers 114 are placed in contact with each other.

A plunger 118 is secured at its end to the rear surface of the cam plate 108 so that the cam plate 108 and the plunger 118 are rotated together by the drive shaft 84. The drive torque of the drive shaft 84 is transmitted to the cam plate 108 through the coupling between the cam plate 108 and the drive shaft 84. The cam plate 108 is engaged to or disengaged from the roller ring 112 according to the connection of the cam faces 110 and the cam rollers 114 when the cam plate 108 is rotated by the drive shaft 84. Accordingly, the plunger 118 is moved back and forth in an axial direction of the plunger 118 (which is one of the right and left directions of FIG.1) in a reciprocating manner when the plunger 118 is rotated.

A cylinder 120 is arranged with the fuel injection pump 80. The rear half of the plunger 118 is rotatably fitted into the cylinder 120. A pump chamber 122 is formed between the rear end of the plunger 118 and the inside end surface of the cylinder 120. A plurality of inlet grooves 130 are formed at the peripheral portions of the rear end of the plunger 118 and a discharge passage 134 is formed at the internal portion of the rear end of the plunger 118. The inlet grooves 130 and the discharge passage 134 communicate with the pump chamber 122. The number of the inlet grooves 130 is the same as the number of the cylinders of the diesel engine 10.

A fuel passage 132, which communicates with one of the inlet grooves 130, is formed in an intermediate housing of the fuel injection pump 80. The fuel passage 132 is open at one end to the fuel chamber 92. A plurality of distribution passages 136, one of which communicates with the discharge passage 134, are formed in a bottom housing of the fuel injection pump 80. The number of the distribution passages 136 is the same as the number of the cylinders of the diesel engine 10. Each of the distribution passages 136 is connected to a corresponding one of the fuel injector valves 50 of the diesel engine 10 by a fuel supply pipe 138.

As described above, the vane pump 86 is operated by the rotation of the drive shaft 84, and fuel from the fuel tank enters the inside of the vane pump 86. The fuel from the vane pump 86 is supplied to the fuel chamber 92 through the fuel feeding passage 90. One end of the fuel feeding passage 90 is open to the fuel chamber 92.

When the plunger 118 is rotated by the rotation of the drive shaft 84 and moved backward (or in the left direction of FIG.1), the pressure of the fuel in the pump chamber 122 is reduced by the backward movement of the plunger 118. During this suction stroke of the plunger 118, one of the inlet grooves 130 is open to the fuel passage 132 so that the fuel from the fuel chamber 92 is delivered to the pump chamber 122.

When the plunger 118 is rotated by the rotation of the drive shaft 84 and moved forward (or in the right direction of FIG.1), the pressure of the fuel in the pump chamber 122 is increased by the forward movement of the plunger 118. During this compression stroke of the plunger 118, the discharge passage 134 of the plunger 118 is open to one of the distribution passages 136 so that the high-pressure fuel from the pump chamber 122 is delivered to the fuel injector valve 50 through the fuel supply pipe 138. The delivery timing of the high-pressure fuel to the fuel injector valve 50 is controlled by using a spill valve 126 which will be described later. The fuel injection for a corresponding cylinder of the diesel engine 10 is carried out by the fuel injection pump 50 and the ECU 12.

A spill passage 124, which is open at one end to the pump chamber 122 and open at the other end to the spill valve 126, is formed at an upper portion of the fuel injection pump 80. The spill passage 124 is provided to spill the fuel from the pump chamber 122 into the fuel chamber 92. Further, a fuel passage 128 which is open at one end to the fuel chamber 92 and open at the other end to the spill valve 126, is formed at the upper portion of the fuel injection pump 80.

The spill valve 126 is an electromagnetic valve which is electrically set in an opened condition or in a closed condition by the ECU 12 to control the flow of the fuel being spilt from the pump chamber 122 into the fuel chamber 92. When the spill valve 126 is set in the opened condition, the pump chamber 122 and the fuel chamber 92 communicate with each other through the spill valve 126 so that the fuel from the pump chamber 122 is spilt into the fuel chamber 92. When the spill valve 126 is set in the closed condition, the pump chamber 122 and the fuel chamber 92 do not communicate with each other and the fuel from the pump chamber 122 is not spilt into the fuel chamber 92.

When a spill-control-on signal from the ECU 12 is not supplied to the spill valve 126, the spill valve 126 is open to the pump chamber 122 via the spill passage 124. The spill valve 126 is set in the opened position, and the spill passage 124 and the fuel passage 128 communicate with each other via the spill valve 126. Further, when the spill valve 126 is set in the opened condition, the delivery of the high-pressure fuel to the fuel injector valve 50 is stopped. Since the spill valve 126 is open to the fuel chamber 92, the pressure of the fuel in the pump chamber 122 does not rise to a valve-opening pressure of the fuel injector valve 50. The fuel injector valve 50 does not inject the fuel to the sub-combustion chamber 46 of the diesel engine 10.

When the spill-control-on signal from the ECU 12 is supplied to the spill valve 126, the spill valve 126 is set in the closed position (or it is switched ON). At this time, the spill passage 124 and the fuel passage 128 do not communicate with each other via the spill valve 126, and the spilling of the fuel from the pump chamber 122 to the fuel chamber 92 is stopped.

The ECU 12 controls the on-time of the spill valve 126 to suitably perform the opening and closing operations of the spill valve 126. Accordingly, the flow of the fuel being spilt from the pump chamber 122 into the fuel chamber 92 via the spill valve 126 is controlled by the ECU 12.

A timer unit 140 is arranged at a bottom portion of the fuel injection pump 80. In FIG.1, a cross-sectional view of the timer unit 140 is shown. The timer unit 140 is provided to adjust the timing of the fuel injection by the fuel injector valve 50 with respect to the rotation angle of the crankshaft 66 of the diesel engine 10.

A rotational position of the roller ring 112 relative to the drive shaft 84 is changed by the timer unit 140. The timing of the connection between the cam faces 110 of the cam plate 108 and the cam rollers 114 of the roller ring 112 can be controlled by the change in the rotational position of the roller ring 112 relative to the drive shaft 84. Therefore, by using the timer unit 140 to change the rotational position of the roller ring 112 relative to the drive shaft 84, the timing of the forward or backward movement of the plunger 118 with respect to the pump chamber 122 can be adjusted.

The timer unit 140 includes a piston 142 which is provided in a housing of the timer unit 140. The timer unit 140 includes a low-pressure chamber 144 on one end surface (or the left side of FIG.1) of the piston 142, a high-pressure chamber 146 on the other end surface (or the right side of FIG.1) of the piston 142, and a spring 148 within the low-pressure chamber 144.

The low-pressure chamber 144 is open at one end to the low-pressure passage 88. The high-pressure chamber 146 is open at one end to the fuel chamber 92. The spring 148 exerts a biasing force on the piston 142 so as to push the piston 142 toward the high-pressure chamber 146.

In the timer unit 140, the low-pressure chamber 144 and the high-pressure chamber 146 communicate with each other through an external passage. A timing control valve 150 is arranged in the external passage of the timer unit 140. The position of the piston 142 within the timer unit 140 is varied depending on the relationship between the biasing force of the spring 148 and the pressure of the fuel in the high-pressure chamber 146. When the position of the piston 142 within the timer unit 140 is varied, the position of the roller ring 112 relative to the drive shaft 84 is varied by the slide pin 152 according to the movement of the piston 142. The change in the position of the roller ring 112 is transferred to the plunger 118 through the cam plate 108. Therefore, the timing of the forward or backward movement of the plunger 118 is controlled by using the timer unit 140.

The timing control valve 150 adjusts the pressure of the fuel within the high-pressure chamber 146. The timing control valve 150 is a solenoid valve which is switched ON or OFF by a control signal output from the ECU 12. The duty ratio of the control signal from the ECU 12 is controlled. The duty ratio of the control signal is a ratio of an on-time of the solenoid valve 150 within a duty cycle to a total duty-cycle time for controlling the switching of the solenoid valve 150.

When the timing control valve 150 is opened by the ECU 12, the low-pressure chamber 144 and the high-pressure chamber 146 communicate with each other through the timing control valve 150 in the external passage of the timer unit 140. At this time, the internal pressure of the high-pressure chamber 146 is essentially the same as the internal pressure of the low-pressure chamber 144, and the position of the piston 142 within the timer unit 140 is maintained near the high-pressure chamber 146 by the biasing force of the spring 148.

When the timing control valve 150 is closed by the ECU 12, the internal pressure of the high-pressure chamber 146 is higher than the internal pressure of the low-pressure chamber 144. At this time, the piston 142 is pushed back toward the low-pressure chamber 144 by the difference between the internal pressure of the high-pressure chamber 146 and the internal pressure of the low-pressure chamber 144 against the biasing force of the spring 148, and the position of the piston 142 within the timer unit 140 is maintained near the low-pressure chamber 144.

The timer unit 140 further includes a slide pin 152, and the piston 142 is connected to the slide pin 152. The slide pin 152 is connected to the roller ring 112. When the piston 142 is moved within the timer unit 140, the slide pin 152 is moved together with the movement of the piston 142. By the movement of the slide pin 152 in the transverse direction (or in one of the left and right directions of FIG.1), the roller ring 112 is rotated relative to the drive shaft 84 in a vertical plane (which is perpendicular to the axial direction of the piston 142). Therefore, the connection between the cam faces 110 of the cam plate 108 and the cam rollers 114 of the roller ring 112 is adjusted by the change in the rotational position of the roller ring 112 relative to the drive shaft 84.

As described above, the cam plate 108 is engaged to or disengaged from the roller ring 112 according to the connection of the cam faces 110 and the cam rollers 114 when the cam plate 108 is rotated by the drive shaft 84. The plunger 118 is moved back or forth in the axial direction of the plunger 118 in a reciprocating manner when the plunger 118 is rotated. When the roller ring 112 is rotated relative to the drive shaft 84 by the slide pin 152, the timing of the connection of the cam faces 110 and the cam rollers 114 is adjusted, and the relationship between the timing of the rotation of the drive shaft 84 and the timing of the movement of the plunger 118 is adjusted. Therefore, when the roller ring 112 is rotated relative to the drive shaft 84 by the slide pin 152, the relationship between the rotational position of the crankshaft 66 and the timing of the suction or compression stroke of the plunger 118 with respect to the pump chamber 122 is adjusted.

The duty ratio of the control signal from the ECU 12 is controlled, and the timing of the opening and closing of the solenoid valve 150 is controlled to adjust the pressure of the fuel within the high-pressure chamber 146. Since the pressure of the fuel within the high-pressure chamber 146 is changed by the control signal from the ECU 12, the timing of the forward or backward movement of the plunger 118 is adjusted, and the timing of the fuel injection by the fuel injector valve 50 is adjusted.

As described above, the ECU 12 controls the timing of the opening and closing of the spill valve 126 and controls the timing of the opening and closing of the timing control valve 150, so that a suitable amount of fuel from the fuel injection pump 80 is injected into the sub-combustion chamber 46 of the diesel engine 10 at a suitable timing in accordance with the operating condition of the diesel engine 10.

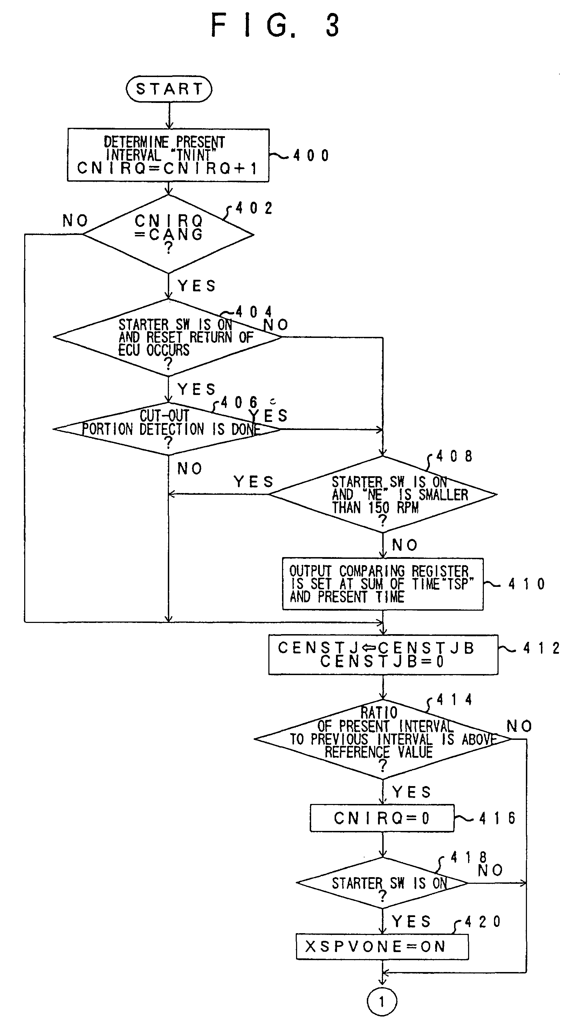

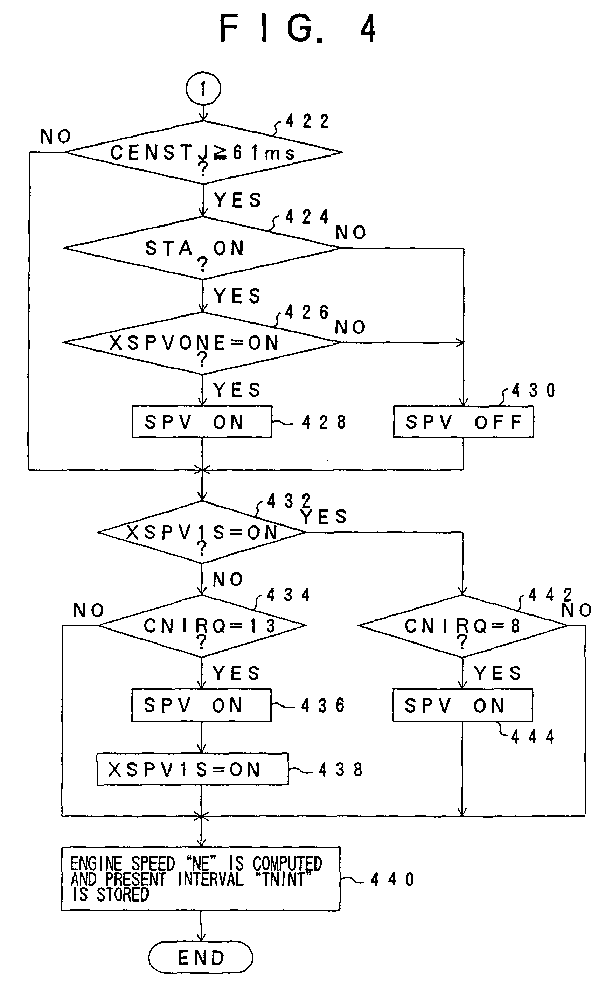

Next, FIGS.3 and 4 show a fuel injection control routine executed by the ECU 12 of the first embodiment of the present invention. The fuel injection control routine of FIGS.3 and 4 is an interrupt routine which is started each time one pulse signal from the NE pulser 106 is supplied to the ECU 12. This routine is also called an NE interrupt routine.

When the control routine of FIGS.3 and 4 is started, the ECU 12 at step 400 determines a time interval TNINT between the time of detection of the pulse signal previously output from the NE pulser 106 and the time of detection of the pulse signal presently output from the NE pulser 106. Further, step 400 increments a pulse-signal counter CNIRQ (CNIRQ = CNIRQ + 1).

The toothed portions 96 of the rotor 94 are formed such that the NE pulser 106 outputs a pulse signal each time the rotation angle of the crankshaft 66 is increased by 11.25°. In addition, the cut-out portions 98 of the rotor 94 are formed such that the rotation angle of each of the cut-out portions 98 around the center of the rotor 94 is 33.75°. The NE pulser 106 does not output the pulse signal when one of the cut-out portions 98 of the rotor 94 passes the pickup coil 100.

Therefore, when one of the teeth 96-1 through 96-13 in the toothed portions 96 of the rotor 94 passes the pickup coil 100 during the rotation of the rotor 94, the value of the interval TNINT determined by the ECU 12 at the step 400 is equal to 11.25°. In this case, the detection of the value (which is equal to 11.25°) of the interval TNINT by the ECU 12 will be called a toothed portion detection. When one of the cut-out portions 98 of the rotor 94 passes the pickup coil 100 during the rotation of the rotor 94, the value of the interval TNINT determined by the ECU 12 at the step 400 is equal to 33.75°. In this case, the detection of the value (which is equal to 33.75°) of the interval TNINT by the ECU 12 is called a cut-out portion detection.

In the present embodiment, the counter CNIRQ is reset to zero at each time of the cut-out portion detection by the ECU 12 (or each time the value of the interval TNINT equal to 33.75° is detected), which will be described later. The counter CNIRQ is incremented at the step 400 each time the pulse signal from the NE pulser 106 is output to the ECU 12 (or the value of the interval TNINT equal to 11.25° is detected). Therefore, the value of the counter CNIRQ indicates the number of the pulse signals output by the NE pulser 106 since the end of the cut-out portion detection by the ECU 12.

After the step 400 is performed, step 402 is performed. Step 402 detects whether the pulse number indicated by the counter CNIRQ is the same as a count value CANG. The count value CANG is computed based on the fuel-injection-end time at which the fuel injection for a corresponding one of the cylinders of the diesel engine 10 is to be finished.

The ECU 12 determines an injection-end rotation angle Θp based on the engine speed NE, the load condition of the diesel engine 10 and other factors. In the present embodiment, when the rotation angle of the crankshaft 66 is equal to the injection-end rotation angle Θp, the fuel injection for the corresponding cylinder of the diesel engine 10 is finished.

Generally, the injection-end rotation angle Θp is defined by the formula: Θp = 11.25 x n + Θr where "n" is an integer and "Θr" is a redundant rotation angle. In the present embodiment, the maximum integer "n" which satisfies the condition: Θp ≥ 11.25 x n is substituted for the count value CANG in the step 402.

When the result at the step 402 is affirmative (CNIRQ = CANG), it is determined that the fuel injection is finished when the rotation angle of the crankshaft 66 is increased by the redundant rotation angle Θr during the period from the time of detection of the present pulse signal and the time of detection of the following pulse signal. After the step 402 is performed, step 404 is performed.

When the result at the step 402 is negative (that is, the counter CNIRQ is not equal to the count value CANG), it is determined that the fuel injection is not finished during the period between the time of detection of the present pulse signal and the time of detection of the following pulse signal. In this case, step 412 is performed after the step 402 is performed, and the following steps 404 through 410 are not performed.

Step 404 detects whether a starter switch (STA) is in an ON state and a reset return of the ECU 12 occurs after the operation of the diesel engine 10 is started. Generally, a reset start of the ECU 12 is performed when an ignition switch (IG) is turned on. In the step 404, it is detected whether a reset return of the ECU 12 has occurred under the condition in which the starter switch is turned on after the reset start of the ECU 12 is performed.

When the result at the step 404 is affirmative, step 406 is performed. When the result at the step 404 is negative, step 406 is not performed and step 408 is performed.

The rotational load on the starter motor of the diesel engine 10 is increased when one of the pistons of the diesel engine 10 approaches its top dead center, and it is decreased after the top dead center is passed by the piston. If the amount of the battery charge is excessively low, the ECU 12 may be reset when one of the pistons of the diesel engine 10 approaches its top dead center, and the reset return of the ECU 12 may occur after the top dead center is passed by the piston.

Therefore, the result at the step 404 is affirmative when the amount of the battery charge is excessively low. The reset return of the ECU 12 occurs if the starter switch is turned on after the reset starting of the ECU 12 is performed.

Step 406 detects whether the cut-out portion detection related to the NE pulser 106 is normally performed after the maximum value of the counter CNIRQ (which is equal to 13) is reached since the occurrence of the reset return of the ECU 12.

As described above, the detection at the step 406 is performed if it is determined that the amount of the battery charge is too low. When the result at the step 406 is negative, it is determined that the operating condition of the diesel engine 10 after the occurrence of the reset return of the ECU 12 is still unstable.

It is desirable to perform the injection of the full amount of fuel with the fuel injection pump 80 when the amount of the battery charge is too low and the operating condition of the diesel engine 10 is still unstable. For this reason, when the result at the step 404 is affirmative and the result at the step 406 is negative, step 412 is performed and the following steps 408 and 410 are not performed, in order to perform the injection of the full amount of fuel with the fuel injection pump 80 as early as possible.

On the other hand, when the result at the step 406 is affirmative, step 408 is performed. Step 408 detects whether the starter switch in an ON state and the engine speed (NE) is less than 150 rpm (revolutions per minute).

When the result at the step 408 is negative, it is determined that the diesel engine 10 is not in a cranking condition. At this time, step 410 is performed in order to set the spill valve 126 in the opened condition.

Generally, the diesel engine 10 is in the cranking condition when the crankshaft 66 is being rotated by the starter motor only. When the result at the step 408 is affirmative, it is determined that the diesel engine 10 is in the cranking condition and the engine speed (NE) is not sufficiently high. In other words, it is determined that the cranking of the diesel engine 10 is not suitably performed. At this time, step 412 is performed and the setting of the spill valve 126 in the opened condition at the step 410 is inhibited.

In the above-described control routine, (1) when the cut-out portion detection after the occurrence of the reset return of the ECU 12 is not yet normally performed, and (2) when the engine speed (NE) during the cranking condition of the engine 10 is less than 150 rpm, the condition in which the injection of the full amount of fuel can be performed with the fuel injection pump 80 is maintained.

In the present embodiment, the ECU 12 computes the engine speed (NE) based on the average engine speed during the period in which the maximum value of the counter CNIRQ (which is equal to 13) is reached after the occurrence of the reset return of the ECU 12. The engine speed (NE) is determined as being zero during the NE non-computation period from the start of cranking of the diesel engine 10 to the time of detection of the maximum value of the counter CNIRQ.

According to the above-described control routine, the condition in which the injection of the full amount of fuel can be performed is maintained during the NE non-computation period. However, when the injection of the full amount of fuel during the NE non-computation period is not suitable for the operating condition of the diesel engine 10, the performance of the injection of the full amount of fuel can be inhibited. When the engine speed (NE) during the cranking condition of the diesel engine 10 is too low, the injection of the full amount of fuel can be suitably performed with the fuel injection pump 80.

In the step 410, the output comparing register in the ECU 12 is set at the sum of the present time and a time TSP required for the rotation of the crankshaft 66 by the redundant rotation angle Θr. The value of the sum of the step 410 is called the fuel-injection-end time. When the elapsed time is equal to the fuel-injection-end time of the output comparing register, the ECU 12 sets the spill valve 126 in the opened condition (or the spill valve 126 is switched OFF).

The time TSP is computed by a fuel injection time computation routine which is executed by the ECU 12 at the same time as the execution of the fuel injection control routine of FIGS.3 and 4. In the fuel injection time computation routine, the time TSP is computed based on the engine speeds related to the rotation angle of the crankshaft 66 around the fuel-injection-end rotation angle Θp, and the value of the redundant rotation angle Θr. The time TSP in the present embodiment will be computed in the following.

When it is detected that the condition CNIRQ = CANG is satisfied, the ECU 12 stores the time interval TNINT between the time of detection of the previous pulse signal and the time of detection of the present pulse signal in a memory area TS1. Further, at the following two cycles, the ECU 12 stores the time interval TNINT incremented at the step 400 in a memory area TS2, and stores the time interval TNINT further incremented at the step 400 in a memory area TS3.

In the fuel injection time computation routine, the ECU 12 determines the engine speeds based on the time intervals TNINT stored in the memory areas, and computes the time TSP based on the determined engine speeds and the value of the redundant rotation angle Θr related to the present pulse signal.

After the step 410 is performed, step 412 is performed. Step 412 stores a value of an engine-stall counter CENSTJB in a memory area CENSTJ and resets the counter CENSTJB to zero. The counter CENSTJB is periodically incremented up to 500 ms (milliseconds) after the ignition switch is turned on. The counter CENSTJB is reset to zero each time the step 412 is performed. The value stored in the memory area CENSTJ indicates an initial period of time for detection of the pulse signal after the switching ON of the ignition switch at the first cycle of the control routine of FIGS.3 and 4. At the subsequent cycles, the value stored in the memory area CENSTJ indicates the interval TNINT between the time of detection of the previous pulse signal and the time of detection of the present pulse signal.

After the step 412 is performed, step 414 detects whether the ratio of the presently determined interval TNINT to the previously determined interval TNINT is above a reference value. When the result at the step 414 is negative, it is determined that the cut-out portion detection related to the NE pulser 106 is not performed with the presently-detected pulse signal. At this time, the following steps 416 through 420 are not performed, and step 422 shown in FIG.4 is performed.

When the result at the step 414 is affirmative, it is determined that the cut-out portion detection related to the NE pulser 106 is performed with the presently-detected pulse signal. That is, it is determined that the presently-detected pulse signal is produced when the tooth 96-0 of the rotor 96 passes the pickup coil 100 during the rotation of the rotor 96. At this time, step 416 is performed.

Step 416 resets the counter CNIRQ to zero. After the step 416 is performed, step 418 is performed.

Step 418 detects whether the starter switch (STA) is in an ON state. When the result at the step 418 is affirmative (STA = ON), it is determined that the diesel engine 10 is in the cranking condition. At this time, step 420 sets a flag XSPVONE in an ON state (XSPVONE = ON). After the step 420 is performed, step 422 is performed.

When the result at the step 418 is negative (STA is OFF), it is determined that the diesel engine 10 is not in the cranking condition. At this time, the step 420 is not performed and step 422 is performed.

The cranking of the diesel engine 10 is performed when the ignition switch is turned on and thereafter the starter switch is turned on. When the cut-out portion detection is performed by the ECU 12 with the presently-detected pulse signal after the starter switch is turned on, both the results of the step 414 and the step 418 are affirmative. Therefore, at this time, the flag XSPVONE is set in an ON state.

In the fuel injection control apparatus of the present embodiment, in order to perform the cut-out portion detection with the presently-detected pulse signal, it is necessary that at least three pulse signals from the NE pulser 106 have been already detected since the start of cranking of the diesel engine 10. Therefore, the setting of the flag XSPVONE in an ON state is not performed before at least three pulse signals are detected since the switching ON of the ignition switch.

As described above, the value stored in the memory area CENSTJ indicates the initial period for detection of the pulse signal after the switching ON of the ignition switch at the first cycle of the control routine of FIGS.3 and 4. At the subsequent cycles, the value stored in the memory area CENSTJ indicates the interval TNINT between the time of detection of the previous pulse signal and the time of detection of the present pulse signal. When three or more pulse signals are detected since the switching ON of the ignition switch, it can be determined that the value stored in the memory area CENSTJ actually indicates the interval TNINT. Accordingly, if the flag XSPVONE is in an ON state, it can be determined that the value stored in the memory area CENSTJ actually indicates the interval TNINT.

Step 422 detects whether the value (the initial period or the interval TNINT) stored in the memory area is greater than 61 ms. In the fuel injection control apparatus of the present embodiment, it is conceivable that the result at the step 422 is affirmative in the following cases: (1) it takes more than 61 ms to detect the pulse signal for the first time since the switching ON of the ignition switch, (2) the diesel engine 10 has stalled, (3) the engine speed (NE) during the cranking of the diesel engine 10 is excessively low.

When the result at the step 422 is affirmative, step 424 is performed. When the result at the step 422 is negative, the following steps 424 through 430 are not performed and step 432 is performed.

Step 424 detects whether the starter switch (STA) is in an ON state. If the starter switch is not in an ON state, it is determined that the diesel engine 10 has stalled. When the result at the step 424 is negative, step 430 is performed. Step 430 sets the spill valve 126 in the opened condition (or it is switched OFF).

When the result at the step 424 is affirmative, step 426 is performed. Step 426 detects whether the flag XSPVONE is in an ON state. If the flag XSPVONE is not in an ON state, it is uncertain whether the value stored in the memory area CENSTJ indicates the interval TNINT. Therefore, when the flag XSPVONE is not in an ON state even if the condition CENSTJ ≥ 61 ms is satisfied, it cannot be determined that the engine speed (NE) during the cranking of the diesel engine 10 is excessively low. At this time, the step 430 is performed to set the spill valve 126 in the opened condition.

When the result at the step 426 is affirmative (XSPVONE = ON), it can be determined that the value stored in the memory area CENSTJ actually indicates the interval TNINT. Therefore, it can be determined that the engine speed (NE) during the cranking of the diesel engine 10 is excessively low. Under such circumstances, it is desirable to perform the injection of the full amount of fuel with the fuel injection pump 80. At this time, step 428 is performed. Step 428 sets the spill valve 126 in the closed condition (or it is switched ON).

According to the above-described control routine, when the engine speed (NE) during the cranking of the diesel engine 10 is excessively low, the spill valve 126 is not switched OFF even if the spill-control-off pulse number is detected. After the spill valve 126 is set in the closed condition at the step 428, the injection of the full amount of fuel is performed with the fuel injection pump 80. Accordingly, the fuel injection control apparatus of the present embodiment can provide a good starting ability of the diesel engine 10 under circumstances where it is difficult to start the diesel engine 10.

After the step 428 or the step 430 is performed, step 432 is performed. Step 432 detects whether a flag XSPV1S is in an ON state. The flag XSPV1S which will be described later is set in an ON state when the condition in which the correct value of the engine speed (NE) can be detected by the ECU 12 is satisfied. The result at the step 432 is negative until the maximum value of the counter CNIRQ (which is equal to 13) is reached since the start of cranking of the diesel engine 10.

When the result at the step 432 is negative (XSPV1S in an OFF state), step 434 is performed. Step 434 detects whether the pulse number indicated by the counter CNIRQ is equal to 13 (the maximum value). When the result at the step 434 is negative, it is determined that the NE non-computation period is not yet finished. At this time, step 440 is performed and the spill valve 126 is not switched ON.

When the result at the step 434 is affirmative (CNIRQ = 13), it is determined that the NE non-computation period is already finished. Therefore, it is determined that the condition in which the correct value of the engine speed (NE) can be detected by the ECU 12 is already satisfied. At this time, step 436 is performed. Step 436 sets the spill valve 126 in the closed condition (or it is switched ON).

As described above, the step 436 is performed assuming that the correct value of the engine speed (NE) can be detected by the ECU 12. It is impossible that, after the spill valve 126 is set in the closed condition at the step 436, the result at the step 408 is affirmative. In the above-described control routine, it is impossible that the performance of the injection of the full amount of fuel is caused by the non-computation of the engine speed (NE) after the start of cranking of the diesel engine 10.

After the step 436 is performed, step 438 is performed. Step 438 sets the flag XSPV1S in an ON state. After the step 438 is performed, step 440 is performed. Once the flag XSPV1S is set in an ON state at the step 438, the result at the step 432 at the following cycles is affirmative. Then, steps 442, 444 and 440 are performed and the steps 434 through 438 are not performed.

Step 440 computes the engine speed (NE) and stores the present interval (TNINT). After the step 440 is performed, the fuel injection control routine at the present cycle is finished.

When the result at the step 432 is affirmative (XSPV1S = ON), step 442 is performed. Step 442 detects whether the pulse number indicated by the counter CNIRQ is equal to 8 (or the spill-control-on pulse number). When the result at the step 442 is affirmative (CNIRQ = 8), step 444 is performed. Step 444 sets the spill valve 126 in the closed condition (or it is switched ON). After the step 444 is performed, the step 440 is performed.

When the result at the step 442 is negative, the step 444 is not performed and the step 440 is performed. At this time, the spill valve 126 is not set in the closed condition, and the computation of the engine speed (NE) and the storing of the present interval (TNINT) are performed.

In the above-described control routine, the spill valve 126 is periodically set in the closed condition each time the rotation angle of the crankshaft 66 is equal to the rotation angle corresponding to the spill-control-on pulse number "8" during the rotation of the crankshaft 66. When the engine speed during the cranking condition of the diesel engine 10 is increased to a sufficiently high speed, the spill valve 126 is periodically set in the opened condition each time the rotation angle of the crankshaft 66 is equal to the rotation angle corresponding to the spill-control-off pulse number. Therefore, the fuel injection control apparatus of the present embodiment can provide good output characteristics and good exhaust characteristics of the diesel engine 10. When the engine speed during the cranking condition of the diesel engine is not increased to a sufficiently high speed, the setting of the spill valve 126 in the opened condition is inhibited and the setting of the spill valve 126 in the closed condition is maintained. Therefore, the fuel injection control apparatus of the present embodiment can provide a good starting ability of the diesel engine 10 when it is otherwise difficult to start the diesel engine 10.

In the above-described embodiment, the spill-control-on signal to the spill valve 126 is issued by the ECU 12 at the first cycle when the pulse number indicated by the counter CNIRQ is equal to 13 after the start of cranking of the diesel engine 10. During the spill control, the spill-control-on signal to the spill valve 126 is issued by the ECU 12 each time the pulse number indicated by the counter CNIRQ is equal to 8. The spill valve 126 is actually set in the closed condition after a certain delay in response to the spill-control-on signal from the ECU 12. Therefore, it is necessary that the spill-on-control signal to the spill valve 126 be issued at a time that is earlier than the actual fuel-injection-start time by the delay of the spill valve 126.

If the diesel engine 10 has stalled, the supplying of the pulse signal from the NE pulser 106 to the ECU 12 is stopped. The fuel injection control routine of FIGS.3 and 4 is not started during the stalled condition of the diesel engine 10. In such a case, it is possible that the spill valve 126 is maintained in the closed condition and the flag XSPVONE is maintained in the ON state. Therefore, when the operation of the diesel engine 10 is restarted after the stalled condition, it is desirable to reset the spill valve 126 in the opened condition and reset the flag XSPVONE in an OFF state before the restart of the fuel injection control routine.

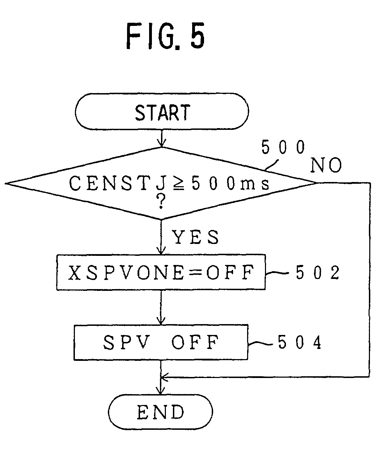

FIG.5 shows another control routine executed by the ECU 12 of the first embodiment in order to achieve the above-mentioned function. The control routine of FIG.5 is periodically started at intervals of a given time (for example, 8 ms).

When the control routine of FIG.5 is started, the ECU 12 at step 500 detects whether the value stored in the memory area CENSTJ exceeds the maximum value (500 ms). As described above, the value of the counter CENSTJB is stored in the memory area CENSTJ at the step 412. If the diesel engine 10 has stalled, the value of the counter CENSTJB which is periodically incremented after the stalling of the engine is stored in the memory area CENSTJ. When the maximum value (500 ms) is reached, the maximum value of the counter CENSTJB is stored in the memory area CENSTJ.

When the result at the step 500 is negative, it is determined that the diesel engine 10 has not stalled. At this time, the following steps are not performed and the control routine at the present cycle is finished. When the result at the step 500 is affirmative, it is determined that the diesel engine 10 has stalled. At this time, step 502 is performed.

Step 502 sets the flag XSPVONE in an OFF state. After the step 502 is performed, step 504 is performed.

Step 504 sets the spill valve 126 in the opened condition (or it is switched OFF). After the step 504 is performed, the control routine at the present cycle is finished.

According to the above control routine of FIG.5, it is possible to reset the spill valve 126 in the opened condition and reset the flag XSPVONE in an OFF state before the fuel injection control routine is restarted after the diesel engine 10 is in the stalled condition.

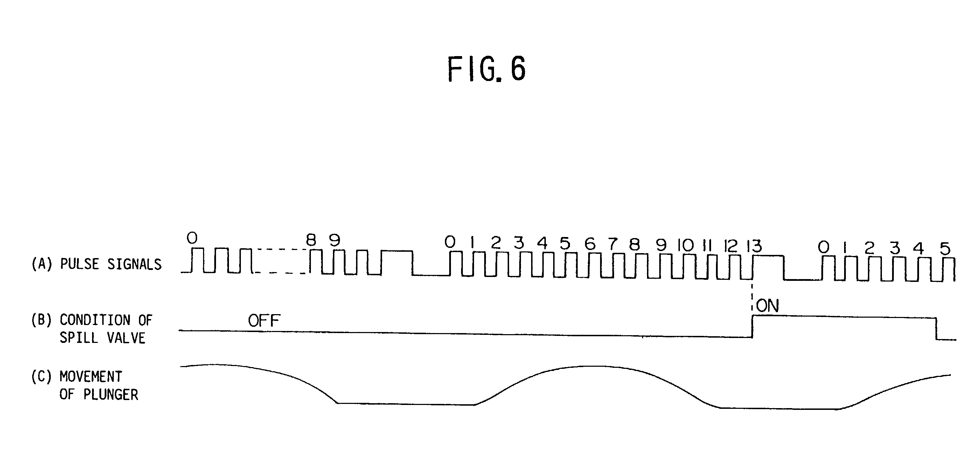

FIG.6 is a timing chart for explaining an operation of the fuel injection control apparatus of the present embodiment when the engine speed during the cranking condition of the engine is sufficiently high.

In the upper portion (A) of FIG.6, pulse signals output from the NE pulser 106 are indicated, and reference numerals indicate each pulse number of the pulse signals, the pulse number being indicated by the counter CNIRQ. In the middle portion (B) of FIG.6, a change of the control signal output to the spill valve 126 is indicated. In the lower portion (C) of FIG.6, a change of the movement of the plunger 118 is indicated. The pulse number "0" corresponds to the pulse signal with which the cut-out portion detection is performed.

As shown in FIG.6, at the initial cycles of the fuel injection control routine of FIGS.3 and 4 after it is started, the results at the steps 422 and 424 are affirmative. In the above-described fuel injection is control apparatus, the flag XSPVONE in an OFF state is maintained at the initial cycles until the cut-out portion detection is performed. Therefore, the spill valve 126 in the opened condition is maintained at the initial cycles.

When the pulse number indicated by the counter CNIRQ is equal to "13" for the first time, the spill valve 126 in the opened condition (the OFF state) is set in the closed condition (the ON state) as shown in FIG.6. After the cranking of the diesel engine 10 is started and the pulse number "13" is reached, the correct value of the engine speed (NE) can be computed by the ECU 12. Therefore, if the engine speed (NE) at the spill-control-off time, after the spill valve 126 is set in the closed condition, is less than 150 rpm, the spill valve 126 in the closed condition is maintained. The injection of the full amount of fuel is suitably performed with the fuel injection pump 80 under circumstances where it is difficult to start the diesel engine 10.

According to the fuel injection control apparatus of the present embodiment, it is possible to prevent the injection of the full amount of fuel from being unnecessarily performed at the time of cranking of the diesel engine 10.

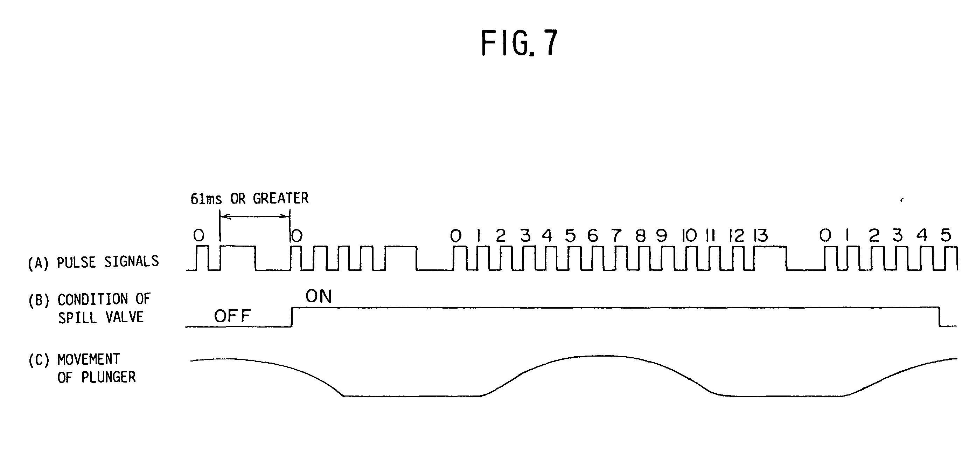

FIG.7 is a timing chart for explaining an operation of the fuel injection control apparatus of the present embodiment when the engine speed during the cranking condition of the engine is excessively low.

In the upper portion (A) of FIG.7, pulse signals output from the NE pulser 106 are indicated, and reference numerals indicate each pulse number of the pulse signals, the pulse number being indicated by the counter CNIRQ. In the middle portion (B) of FIG.7, a change of the control signal output to the spill valve 126 is indicated. In the lower portion (C) of FIG.7, a change of the movement of the plunger 118 is indicated.

When the amount of the battery charge is at a considerably low level, the engine speed (NE) after the starter switch is turned on is likely to become too low. Under such circumstances, it is desirable to perform the injection of the full amount of fuel immediately after the cranking of the engine is started.

In the case of FIG.7, the engine speed (NE) after the cranking of the engine is started is excessively low, and the condition CENSTJ ≥ 61 ms is satisfied, and the result at the step 414 is affirmative. Since the result at the step 422 is affirmative, the spill valve 126 is set in the closed condition (or it is switched ON) immediately after the cranking of the diesel engine 10 is started. Therefore, the injection of the full amount of fuel is performed with the fuel injection pump 80 immediately after the cranking of the engine is started.

As shown in FIG.7, the spill valve 126 in the closed condition is maintained and the performance of the injection of the full amount of fuel is continuously maintained until the starter switch is detected at the step 424 to be in an OFF state or until the engine speed (NE) is detected at the step 408 to be higher than 150 rpm. After the cranking of the diesel engine 10 is suitably completed, the spill valve 126 is periodically set in the opened condition (or it is switched OFF) each time the rotation angle of the crankshaft 66 is equal to the rotation angle related to the spill-control-off pulse number.

As described above, according to the fuel injection control apparatus of the present embodiment, it is possible to start the injection of the full amount of fuel immediately after the start of the cranking of the engine if the engine speed during the cranking condition of the engine is excessively low. Therefore, it is possible for the above-described embodiment to provide a good starting ability of the diesel engine 10 as well as good exhaust characteristics of the diesel engine 10.

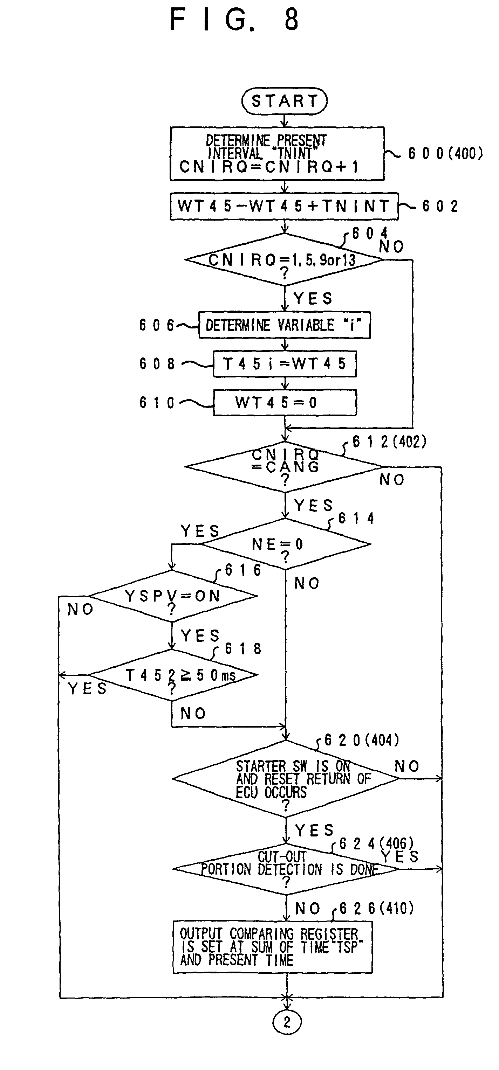

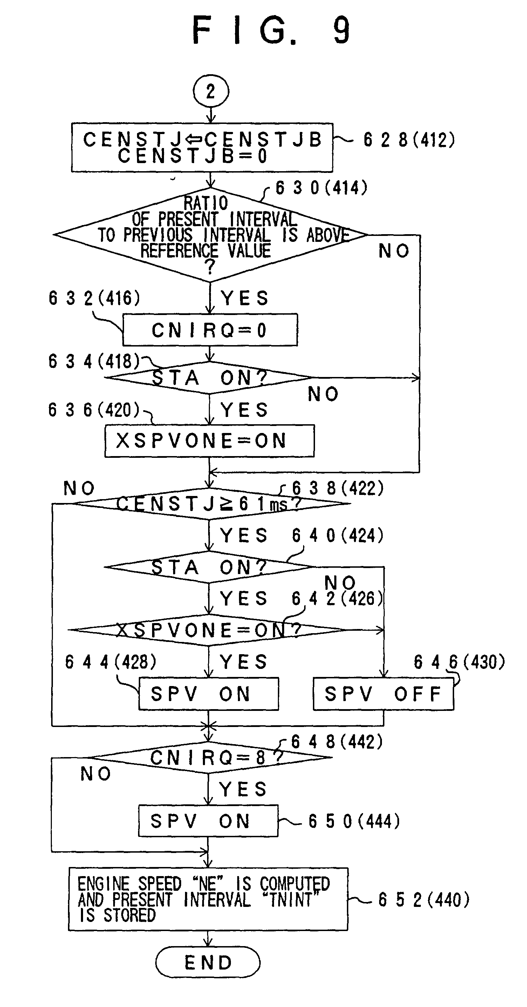

Next, FIGS.8 and 9 are a flowchart for explaining a control routine executed by the control unit in a second embodiment of the present invention.

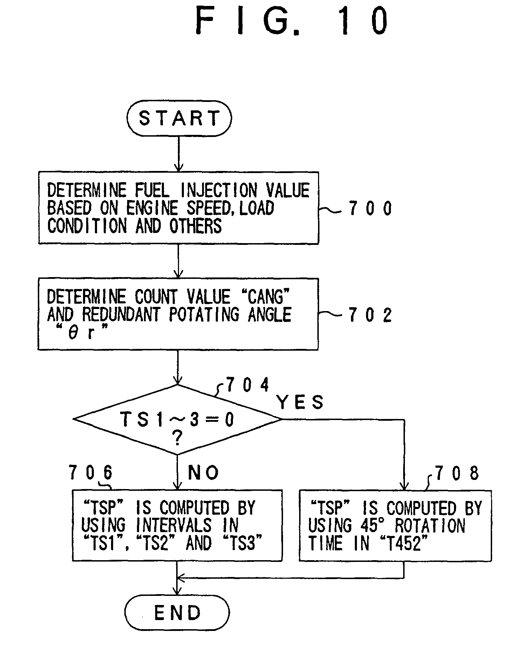

Similarly to the first embodiment of FIGS.1 through 5, the fuel injection control apparatus of the present embodiment is applied to the diesel engine 10 of FIG.1, and the control routine of FIG.5 and the control routine of FIGS.8 and 9 are executed by the ECU 12. Further, in the present embodiment, a fuel injection time computation routine of FIG.10 is executed by the ECU 12 in order to compute the above-mentioned time TSP.

In the above-described control routine of FIGS.3 and 4, the setting of the spill valve 126 in the closed condition during the NE non-computation period is inhibited except the case in which the engine speed during the cranking condition of the diesel engine 10 is excessively low. The above-described control routine of FIGS.3 and 4 is useful to prevent the injection of the full amount of fuel from being unnecessarily performed during the NE non-computation period. However, according to the control routine of the first embodiment, the fuel injection for the diesel engine 10 during the NE non-computation period is always inhibited except the case in which the engine speed during the cranking condition of the diesel engine 10 is excessively low.

In order to provide a good starting ability of the diesel engine 10, it is desirable that the fuel injection for the diesel engine 10 during the NE non-computation period can be suitably performed. The fuel injection control apparatus of the present embodiment is useful in that the desirable performance of the injection of the full amount of fuel during the NE non-computation period is allowed while unnecessary performance of the injection of the full amount of fuel during the NE non-computation period is prevented.

The control routine of FIGS.8 and 9 is an interrupt routine which is started each time one pulse signal from the NE pulser 106 is supplied to the ECU 12. In the control routine of FIGS.8 and 9, the steps which are the same as corresponding steps in the control routine of FIGS.3 and 4 are designated by the same reference numerals in parentheses, and a description thereof will be omitted.

When the control routine of FIGS.8 and 9 is started, step 600 which is the same as the step 400 of FIG.3 is performed by the ECU 12. After the step 600 is performed, step 602 is performed.

Step 602 determines an interval sum WT45 by adding the present interval TNINT to a previous interval sum WT45 (WT45 = WT45 + TNINT). The interval sum WT45 is used to compute a 45° rotation time required for the crankshaft 66 of the diesel engine 10 to be rotated by 45° CA (crank angle). After the step 602 is performed, step 604 is performed.

Step 604 detects whether the pulse number indicated by the counter CNIRQ is equal to "1", "5", "9" or "13". The crankshaft 66 of the engine is rotated by 45° CA during a change of the pulse number indicated by the counter CNIRQ from "1" to "5". Similarly, the crankshaft 66 of the engine is rotated by 45° CA during each change of the pulse number indicated by the counter CNIRQ from "5" to "9", from "9" to "13", and from "13" to "1". In the control routine of the present embodiment, the 45° rotation time is computed by using the interval sum WT45 each time the crankshaft 66 of the engine is rotated by 45° CA. When the result at the step 604 is affirmative, step 606 is performed. When the result at the step 604 is negative, the following steps 606 through 610 are not performed and step 612 is performed.

Step 606 determines a variable "i" by the pulse number (which is equal to "1", "5", "9" or "13") indicated by the counter CNIRQ. That is, when CNIRQ = 1, the variable i is set at "1"; when CNIRQ = 5, the variable i is set at "2", when CNIRQ = 9, the variable i is set at "3"; and when CNIRQ = 13, the variable i is set at "4". After the step 606 is performed, step 608 is performed.

Step 608 stores a value of the interval sum WT45 in one of memory areas T45i where i = 1 to 4 (T45i = WT45). After the step 608 is performed, step 610 resets the interval sum WT45 to zero (WT45 = 0). After the step 610 is performed, step 612 is performed.

According to the above-described steps, the interval sum WT45 is reset to zero each time the pulse number indicated by the counter CNIRQ is equal to "1", "5", "9" or "13". The interval TNINT is added to the previous interval sum WT45 to obtain the 45° rotation time each time one pulse signal from the NE pulser 106 is output to the ECU 12 during the 45° CA rotation of the crankshaft 66 of the engine. Therefore, four 45° rotation times each of which is accurately computed by using the interval sum WT45 for a corresponding 45° CA range of the rotation angle with respect to the crankshaft 66 are stored in the memory areas T45i (i = 1 to 4).

Step 612 which is the same as the step 402 of FIG.3 detects whether the pulse number indicated by the counter CNIRQ is the same as the count value CANG. When the result at the step 612 is affirmative (CNIRQ = CANG), step 614 is performed. When the result at the step 612 is negative, the following steps 614 through 626 are not performed and step 628 is performed.

Step 614 detects whether the engine speed (NE) is equal to 0 rpm. The ECU 12 of the present embodiment computes a 180° rotation time by a sum of the four 45° rotation times stored in the memory areas T45i (i = 1 to 4), and computes the engine speed (NE) based on the 180° rotation time. Further, the ECU 12 of the present embodiment determines the engine speed (NE) as being zero until all four 45° rotation times which are not equal to zero are stored in the memory areas T45i after the start of cranking of the diesel engine 10. Therefore, the result at the step 614 is affirmative during the initial period prior to the time all four 45° rotation times which are not equal to zero are stored in the memory areas T45i after the start of cranking of the engine. At this time, the pulse number indicated by the counter CNIRQ is equal to "13" after the start of cranking of the engine. When the result at the step 614 is affirmative, step 616 is performed.

When the result at the step 614 is negative, it is determined that the NE non-computation period for the diesel engine 10 is finished. At this time, the following steps 616 and 618 are not performed and step 620 which is the same as the step 404 of FIG.3 is performed.

Step 616 detects whether a control signal YSPV output to the spill valve 126 is in an ON state. In the control routine of the present embodiment, the control signal output to the spill valve 126 is switched from an OFF state to an ON state each time the pulse number indicated by the counter CNIRQ is equal to "8". Therefore, in the control routine of the present embodiment, when eight pulse signals from the NE pulser 106 are detected by the ECU 12 after the start of cranking of the diesel engine 10, the control signal output to the spill valve 126 is set in an ON state even when the NE non-computation period is not finished.

Accordingly, the result at the step 616 is affirmative when the control signal output to the spill valve 126 is set in an ON state during the NE non-computation period. When the result at the step 616 is affirmative (YSPV = ON), step 618 is performed to determine a spill-valve-off time at which the spill valve 126 is set in the opened condition. When the result at the step 616 is negative (YSPV = OFF), it is not necessary to determine the spill-valve-off time. At this time, the following steps 618 through 626 are not performed and step 628 is performed.

Step 618 detects whether the 45° rotation time stored in the memory area T452 is greater than 50 ms. The 45° rotation time stored in the memory area T451 when the pulse number indicated by the counter CNIRQ is equal to "1" is likely to be inaccurate. It is conceivable that the 45° rotation time stored in the memory area T452 is an accurate value obtained at the earliest timing after the start of cranking of the diesel engine 10.

The step 618 is continuously performed until the NE non-computation period is finished after the start of cranking of the engine. When the result at the step 618 is affirmative, it is determined that the engine speed during the NE non-computation period is excessively low. When the result at the step 618 is negative, it is determined that the engine speed during the NE non-computation period is sufficiently high.

When the engine speed during the NE non-computation period is sufficiently high, the injection of the full amount of fuel should not be performed. At this time, it is desirable to switch the control signal YSPV output to the spill valve 126 from an ON state to an OFF state. Therefore, when the result at the step 618 is negative, step 620 is performed.

When the engine speed during the NE non-computation period is excessively low, it is desirable to perform the injection of the full amount of fuel in order to provide a good starting ability of the diesel engine 10. Therefore, when the result at the step 618 is affirmative, the following steps 620 through 626 are not performed and step 628 is performed. At this time, the output comparing register is not set at the sum of the time "TSP" and the present time, and the control signal output to the spill valve 126 is not switched from an ON state to an OFF state. Consequently, the injection of the full amount of fuel is performed with the fuel injection pump 80.

Steps 620, 624 and 626 of FIG.8 are the same as the steps 404, 406 and 410 of FIG.3 respectively. Steps 628 through 636 of FIG.9 are the same as the steps 412 through 420 of FIG.3, and the steps 638 through 652 of FIG.9 are the same as the steps 422 through 440 of FIG.4, respectively.

According to the above-described steps, each time the pulse number indicated by the counter CNIRQ is equal to "8", the spill valve 126 is set in the closed condition (or it is switched ON), except for the case in which the engine speed during the cranking condition of the engine is excessively low.

In the control routine of FIGS.8 and 9, when the step 626 is performed for the first time after the start of cranking of the diesel engine 10, the time intervals TNINT which are suitable to compute the time TSP are not yet stored in the memory areas TS1, TS2 and TS3. Therefore, it is necessary for the ECU 12 of the present embodiment to execute a fuel injection time computation routine at the same time as the execution of the control routine of FIGS.8 and 9, in order to compute the time TSP for use in the step 626 of the control routine of FIGS.8 and 9.

FIG.10 shows a fuel injection time computation routine executed by the ECU 12 of the second embodiment. The fuel injection time computation routine of FIG.10 is periodically started at intervals of a given time.

When the routine of FIG.10 is started, the ECU 12 at step 700 determines a fuel injection value in accordance with an operating condition of the diesel engine 10 based on the engine speed, the load condition of the diesel engine 10 and other parameters. After the step 700 is performed, step 702 is performed.

Step 702 determines the count value CANG and the redundant rotation angle Θr based on the fuel injection value determined at the step 700. Similarly to the first embodiment, the count value CANG corresponds to the maximum integer "n" which satisfies the condition: Θp ≥ 11.25 x n where Θp is the injection-end rotation angle defined by the formula: Θp = 11.25 x n + Θr. After the step 702 is performed, step 704 is performed.

Step 704 detects whether all the time intervals TNINT stored in the memory areas TS1, TS2 and TS3 are equal to zero "0". Similarly to the first embodiment, the ECU 12 of the present embodiment stores the intervals TNINT in the memory areas TS1, TS2 and TS3 each time the control signal YSPV output to the spill valve 126 is switched from an ON state to an OFF state.

When the result at the step 704 is negative, it is determined that the control signal YSPV is already set in an OFF state after the start of cranking of the diesel engine 10. At this time, step 706 is performed. Step 706 computes the time TSP by using the time intervals TNINT stored in the memory areas TS1, TS2 and TS3 similarly to the first embodiment.

When the result at the step 704 is affirmative, it is determined that the control signal YSPV is not yet set in an OFF state after the start of cranking of the diesel engine 10. At this time, step 708 is performed.

Step 708 computes the time TSP by using the 45° rotation time stored in the memory area T452. The 45° rotation time stored in the memory area T452 is the time required for the 45° rotation of the crankshaft 66 in a corresponding 45° CA range prior to the injection-end rotation angle Θp of the crankshaft 66. By using the 45° rotation time, the engine speed when the rotation angle of the crankshaft 66 is equal to the injection-end rotation angle Θp is accurately computed by the ECU 12. In the step 708, the time TSP is accurately computed based on the engine speed and the redundant rotation angle Θr.

After the step 706 or the step 708 is performed, the fuel injection time computation routine at the present cycle is finished.

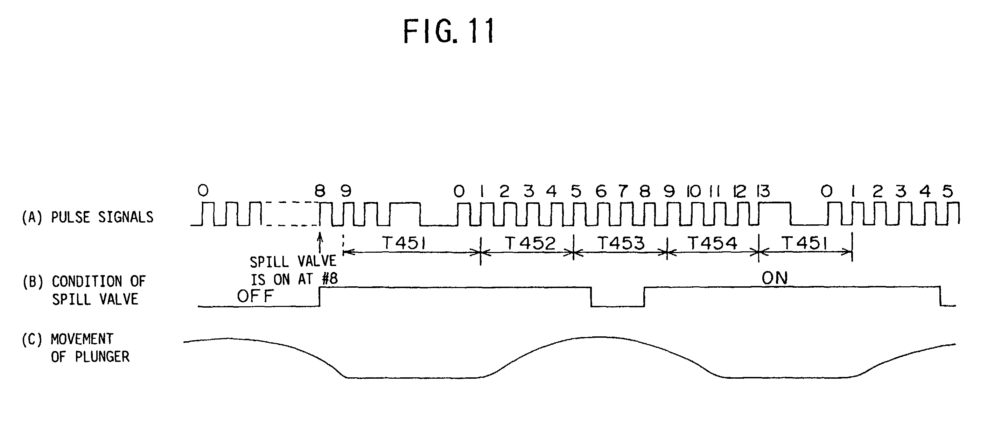

FIG.11 is a timing chart for explaining an operation of the fuel injection control apparatus of the present embodiment when the engine speed during the cranking condition of the engine is sufficiently high.

In the upper portion (A) of FIG.11, pulse signals output from the NE pulser 106 are indicated, and reference numerals indicate each pulse number of the pulse signals, the pulse number being indicated by the counter CNIRQ. In the middle portion (B) of FIG.11, a change of the control signal output to the spill valve 126 is indicated. In the lower portion (C) of FIG.11, a change of the movement of the plunger 118 is indicated.

In the case of FIG.11, after the starter switch (STA) is turned on, the cranking of the diesel engine 10 is started, and the counting of the pulse signals from the NE pulser 106 supplied to the ECU 12 is started. The value of the counter CNIRQ indicates the pulse number of each of the pulse signals supplied to the ECU 12.

As shown in FIG.11, in the present embodiment, the control signal YSPV output to the spill valve 126 is set in an ON state each time the pulse number indicated by the counter CNIRQ is equal to "8".

After the pulse signal which satisfies the cut-out portion detection is detected for the first time, the pulse number indicated by the counter CNIRQ is equal to "1". At this time, the 45° rotation time of the interval sum WT45 is stored in the memory area T451. As described above, the time stored in the memory area T451 is likely to be inaccurate.

Thereafter, when the pulse number indicated by the counter CNIRQ is equal to "5", the 45° rotation time of the interval sum WT 45 is stored in the memory area T452. The 45° rotation time stored in the memory area T452 is the accurate value obtained at the earliest timing after the start of cranking of the engine.

In the case in which the engine speed after the start of cranking of the diesel engine 10 is sufficiently high, the time stored in the memory area T452 is less than 50 ms. Since the result at the step 618 in this case is negative, the spill-control-off time is set immediately after the pulse number indicated by the counter CNIRQ is equal to "5". When the elapsed time is equal to the spill-control-off time, the control signal YSPV output to the spill valve 126 is switched from an ON state to an OFF state. In the case of FIG.11, a suitable amount of fuel from the fuel injection pump 80 is injected to the diesel engine 10 at a suitable timing during the period from the start of the cranking of the engine to the switching of the spill valve 126 in an OFF state. Therefore, it is possible for the fuel injection control apparatus of the present embodiment to provide a good starting ability of the diesel engine 10 as well as good exhaust characteristics of the diesel engine 10.

Further, in a case in which the engine speed after the start of cranking of the diesel engine 10 is excessively low, or under circumstances where it is difficult to start the diesel engine 10, it is possible that the time stored in the memory area T452 during the NE non-computation period after the start of cranking of the engine is greater than 50 ms. Since the result at the step 618 in this case is affirmative, the ECU 12 maintains the setting of the control signal YSPV in an ON state. In the fuel injection control apparatus of the present embodiment, under circumstances where it is difficult to start the diesel engine 10, the injection of the full amount of fuel is performed with the fuel injection pump 80 immediately after the start of cranking of the engine. Therefore, it is possible for the fuel injection control apparatus of the present embodiment to provide a good starting ability of the diesel engine 10 when it is otherwise difficult to start the diesel engine 10.

Further, the present invention is not limited to the above-described embodiments, and variations and modifications may be made without departing from the present invention.

A fuel injection control apparatus of a diesel engine includes a spill valve (126) which opens and closes a high-pressure chamber of a fuel injection pump. A rotation angle sensing unit (106) senses a rotation angle of a crankshaft of the engine. A first unit (12, 442) sets the spill valve in a closed condition each time the rotation angle sensed by the rotation angle sensing unit is equal to a spill-control-off rotation angle. A second unit (12, 400, 410) sets the spill valve in an opened condition when the rotation angle sensed by the rotation angle sensing unit is equal to a fuel-injection-end rotation angle. A third unit (12, 408) inhibits the setting of the spill valve in the opened condition by the second unit when an engine speed during a cranking condition of the engine is less than a reference value. A fourth unit (12, 432, 434) inhibits the setting of the spill valve in the closed condition by the first unit during a period from the start of cranking of the engine to the start of computation of the engine speed.

## Claims

1. A fuel injection control apparatus of a diesel engine including: a spill valve for opening or closing a high-pressure chamber of a fuel injection pump; a rotation angle sensing unit for sensing a rotation angle of a crankshaft of the engine; first means for setting the spill valve in a closed condition each time the rotation angle sensed by the rotation angle sensing unit is equal to a spill-control-off rotation angle; second means for setting the spill valve in an opened condition when the rotation angle sensed by the rotation angle sensing unit is equal to a fuel-injection-end rotation angle; and third means for inhibiting the setting of the spill valve in the opened condition by the second means when an engine speed during a cranking condition of the engine is less than a reference value,
**characterized in that** said apparatus comprises fourth means (12, 432, 434) for inhibiting the setting of the spill valve (126) in the closed condition by the first means (12, 442) during a period from the start of cranking of the engine to the start of computation of the engine speed.

2. The apparatus according to claim 1, **characterized in that** said apparatus comprises fifth means (12, 436) for setting the spill valve (126) in the closed condition prior to the setting of the spill valve in the closed condition by the first means (12, 442) when the setting of the spill valve in the closed condition is not inhibited by the fourth means (12, 432, 434) after the period.

3. The apparatus according to claim 1, **characterized in that** said apparatus comprises sixth means (12, 422, 428) for setting the spill valve (126) in the closed condition when the engine speed during the cranking condition of the engine is less than the reference value, regardless of whether the computation of the engine speed is started.

4. The fuel injection control apparatus according to claim 1, **characterized in that** said apparatus comprises restart setting means (12, 504) for setting the spill valve (126) in the opened condition when the cranking of the engine is restarted after the engine has stalled.

5. The fuel injection control apparatus according to claim 1, **characterized in that** said apparatus comprises engine-stall detecting means (12, 500) for detecting whether a value of an engine-stall counter which is incremented at intervals of a predetermined time is greater than a maximum value.

6. The fuel injection control apparatus according to claim 4, **characterized in that** the setting of the spill valve (126) in the opened condition by the restart setting means (12, 504) is controlled at intervals of a predetermined time.

7. The fuel injection control apparatus according to claim 1, **characterized in that** the inhibition of the setting of the spill valve (126) in the closed condition by the fourth means (12, 432, 434) is controlled each time a pulse signal from the rotation angle sensing unit (106) is supplied to an electronic control unit (12).

8. The fuel injection control apparatus according to claim 1, **characterized in that** said rotation angle sensing unit (106) comprises a pickup coil (100) and a rotor (94), said rotor having a plurality of toothed portions (96) and a plurality of cut-out portions (98) on an outer periphery of the rotor.

9. The fuel injection control apparatus according to claim 1, **characterized in that** said spill valve (126) is an electromagnetic valve which is arranged in the fuel injection pump and electrically set in the opened condition or in the closed condition by an electronic control unit (12).

10. A fuel injection control apparatus of a diesel engine which includes: a spill valve (126) for opening or closing a high-pressure chamber of a fuel injection pump; a rotation angle sensing unit (106) for sensing a rotation angle of a crankshaft of the engine; first means (12, 642) for setting the spill valve in a closed condition each time the rotation angle sensed by the rotation angle sensing unit is equal to a spill-control-off rotation angle; second means (12, 612, 624) for setting the spill valve in an opened condition when the rotation angle sensed by the rotation angle sensing unit is equal to a fuel-injection-end rotation angle; and third means (12, 616, 618) for inhibiting the setting of the spill valve in the opened condition by the second means when an engine speed during a cranking condition of the engine is less than a reference value,
**characterized in that** said apparatus comprises temporary-engine-speed computing means (12, 626, 708) for computing a temporary engine speed based on an engine speed related to a predetermined rotation angle of the crankshaft, prior to the setting of the spill valve (126) in the opened condition by the second means (12, 612, 624), when the spill valve is set in the closed condition by the first means (12, 642) during a period from the start of cranking of the engine to the start of computation of the engine speed, and
that, when the temporary engine speed is computed by the temporary-engine-speed computing means (12, 626, 708), the third means (12, 616, 618) makes a determination as to whether the setting of the spill valve in the opened condition is inhibited or allowed, based on the temporary engine speed.

## Patentansprüche

1. Kraftstoffeinspritzungssteuergerät für einen Dieselmotor, enthaltend: ein Überströmventil zum Öffnen oder Schließen einer Hochdruckkammer einer Kraftstoffeinspritzpumpe; eine Rotationswinkel-Abtasteinheit zum Abtasten eines Rotationswinkels von einer Kurbelwelle des Motors; ein erstes Mittel zum Einstellen des Überströmventils in eine geschlossene Bedingung, und zwar jedesmal wenn der durch die Rotationswinkel-Abtasteinheit abgetastete Rotationswinkel gleich einem Überströmaussteuerung-Rotationswinkel ist; ein zweites Mittel zum Einstellen des Überströmventils in eine geöffnete Bedingung, wenn der durch die Rotationswinkel-Abtasteinheit abgetastete Rotationswinkel gleich einem Kraftstoff-Einspritzende Rotationswinkel ist; und ein drittes Mittel zum Sperren der Einstellung des Überströmventils in die geöffnete Bedingung durch das zweite Mittel, wenn eine Motorgeschwindigkeit während einer Anlassbedingung des Motors geringer als ein Referenzwert ist,
**dadurch gekennzeichnet, dass** das Gerät ferner ein viertes Mittel (12, 432, 434) zum Sperren der Einstellung des Überströmventils (126) in die geschlossene Bedingung durch das erste Mittel (12, 442) während einer Zeitperiode vom Start des Anlassens des Motors bis zum Start der Berechnung der Motorgeschwindigkeit umfaßt.

2. Gerät nach Anspruch 1, **dadurch gekennzeichnet, dass** das Gerät ein fünftes Mittel (12, 436) zum Einstellen des Überströmventils (126) in die geschlossene Bedingung vor dem Einstellen des Überströmventils in die geschlossene Bedingung durch das erste Mittel (12, 442) umfaßt, wenn nach der Zeitperiode die Einstellung des Überströmventils in die geschlossene Bedingung nicht durch das vierte Mittel (12, 432, 434) gesperrt wird.

3. Gerät nach Anspruch 1, **dadurch gekennzeichnet, dass** das Gerät ein sechstes Mittel (12, 422, 428) zum Einstellen des Überströmventils (126) in die geschlossene Bedingung umfaßt, wenn die Motorgeschwindigkeit während der Anlassbedingung des Motors, unabhängig davon, ob die Berechnung der Motorgeschwindigkeit begonnen wird, geringer als der Referenzwert ist.

4. Kraftstoffeinspritzungssteuergerät nach Anspruch 1, **dadurch gekennzeichnet, dass** das Gerät ein Neustart-Einstellmittel (12, 504) zum Einstellen des Überströmventils (126) in die geöffnete Bedingung umfaßt, wenn das Anlassen des Motors neu gestartet wird, nachdem der Motor abgewürgt ist.

5. Kraftstoffeinspritzungssteuergerät nach Anspruch 1, **dadurch gekennzeichnet, dass** das Gerät ein Motorabwürg-Erfassungsmittel (12, 500) umfaßt, zum Erfassen ob ein Wert eines Motorabwürg-Zählers, welcher bei Intervallen einer vorbestimmten Zeit erhöht wird, größer als ein Maximalwert ist.

6. Kraftstoffeinspritzungssteuergerät nach Anspruch 4, **dadurch gekennzeichnet, dass** das Einstellen des Überströmventils (126) in die geöffnete Bedingung durch das Neustart-Einstellmittel (12, 504) an Intervallen einer vorbestimmten Zeit gesteuert wird.

7. Kraftstoffeinspritzungssteuergerät nach Anspruch 1, **dadurch gekennzeichnet, dass** die Verzögerung des Einstellens des Überströmventils (126) in die geschlossene Bedingung durch das vierte Mittel (12, 432, 434) jedesmal gesteuert wird, wenn ein Impulssignal von der Rotationswinkel-Abtasteinheit (106) an eine elektronische Steuereinheit (12) zugeführt wird.

8. Kraftstoffeinspritzungssteuergerät nach Anspruch 1, **dadurch gekennzeichnet, dass** die Rotationswinkel-Abtasteinheit (106) eine Abnahmewicklung (100) und einen Rotor (94) umfaßt, wobei der Rotor eine Mehrzahl an gezahnten Abschnitten (96) und eine Mehrzahl an Ausschnittabschnitten (98) an dem äußeren Umfang des Rotors hat.

9. Kraftstoffeinspritzungssteuergerät nach Anspruch 1, **dadurch gekennzeichnet, dass** das Überströmventil (126) ein elektromagnetisches Ventil ist, welches in der Kraftstoffeinspritzpumpe angeordnet ist, und durch eine elektronische Steuereinheit (12) elektrisch in die geöffnete Bedingung oder in die geschlossene Bedingung eingestellt wird.

10. Kraftstoffeinspritzungssteuergerät für einen Dieselmotor, welches enthält: ein Überströmventil (126) zum Öffnen oder Schließen einer Hochdruckkammer einer Kraftstoffeinspritzpumpe; eine Rotationswinkel-Abtasteinheit (106) zum Abtasten eines Rotationswinkels von einer Kurbelwelle des Motors; ein erstes Mittel (12, 642) zum Einstellen des Überströmventils in eine geschlossene Bedingung, und zwar jedes mal, wenn der durch die Rotationswinkel-Abtasteinheit abgetastete Rotationswinkel gleich einem Überströmaussteuerung-Rotationswinkel ist; ein zweites Mittel (12, 612, 624) zum Einstellen des Überströmventils in eine geöffnete Bedingung, wenn der durch die Rotationswinkel-Abtasteinheit abgetastete Rotationswinkel gleich einem Kraftstoff-Einspritzende Rotationswinkel ist; und ein drittes Mittel (12, 616, 618) zum Sperren des Einstellens des Überströmventils in die geöffnete Bedingung durch das zweite Mittel, wenn eine Motorgeschwindigkeit während einer Anlassbedingung des Motors geringer als ein Referenzwert ist,
**dadurch gekennzeichnet, dass** das Gerät ein Mittel zur Berechnung einer temporären Motorgeschwindigkeit (12, 626, 708) zum Berechnen einer temporären Motorgeschwindigkeit umfaßt, und zwar basierend auf einer Motorgeschwindigkeit in Bezug auf einen vorbestimmten Rotationswinkel der Kurbelwelle, vor dem Einstellen des Überströmventils (126) in die geöffnete Bedingung durch das zweite Mittel (12, 612, 624), wenn das Überströmventil durch das erste Mittel (12, 642) in die geschlossene Bedingung eingestellt wird, und zwar während einer Zeitperiode vom Start des Anlassens des Motors bis zum Start der Berechnung der Motorgeschwindigkeit, und dass, wenn die temporäre Motorgeschwindigkeit durch das Mittel zur Berechnung einer temporären Motorgeschwindigkeit (12, 626, 708) berechnet wird, das dritte Mittel (12, 616, 618) eine Bestimmung trifft, ob das Einstellen des Überströmventils in die geöffnete Bedingung basierend auf der temporären Motorgeschwindigkeit gesperrt oder zugelassen wird.

## Revendications

1. Dispositif de commande d'injection de carburant d'un moteur diesel comprenant : une soupape de décharge destinée à ouvrir ou fermer une chambre à haute pression d'une pompe d'injection de carburant, une unité de détection d'angle de rotation destinée à détecter un angle de rotation d'un vilebrequin du moteur, un premier moyen destiné à établir la soupape de décharge dans un état fermé à chaque fois que l'angle de rotation détecté par l'unité de détection d'angle de rotation est égal à un angle de rotation de coupure de commande de décharge, un second moyen destiné à établir la soupape de décharge dans un état ouvert lorsque l'angle de rotation détecté par l'unité de détection d'angle de rotation est égal à un angle de rotation de fin d'injection de carburant et un troisième moyen destiné à empêcher l'établissement de la soupape de décharge dans l'état ouvert par le second moyen lorsque le régime du moteur pendant une condition de démarrage du moteur est inférieur à une valeur de référence,
**caractérisé en ce que** ledit dispositif comprend un quatrième moyen (12, 432, 434) destiné à empêcher l'établissement de la soupape de décharge (126) dans l'état fermé par le premier moyen (12, 442) pendant une période allant du début du démarrage du moteur au début du calcul du régime du moteur.

2. Dispositif selon la revendication 1, **caractérisé en ce que** ledit dispositif comprend un cinquième moyen (12, 436) destiné à établir la soupape de décharge (126) à l'état fermé avant l'établissement de la soupape de décharge à l'état fermé par le premier moyen (12, 442) lorsque l'établissement de la soupape de décharge à l'état fermé n'est pas empêché par le quatrième moyen (12, 432, 434) après la période.

3. Dispositif selon la revendication 1, **caractérisé en ce que** ledit dispositif comprend un sixième moyen (12, 422, 428) destiné à établir la soupape de décharge (126) à l'état fermé lorsque le régime du moteur pendant la condition de démarrage du moteur est inférieure à la valeur de référence indépendamment de ce que le calcul de régime du moteur a débuté.

4. Dispositif de commande d'injection de carburant selon la revendication 1, **caractérisé en ce que** ledit dispositif comprend un moyen d'établissement de redémarrage (12, 504) destiné à établir la soupape de décharge (126) à l'état ouvert lorsque le démarrage du moteur est redémarré après que le moteur a calé.

5. Dispositif de commande d'injection de carburant selon la revendication 1, **caractérisé en ce que** ledit dispositif comprend un moyen de détection de calage de moteur (12, 500) destiné à détecter si une valeur de compteur de calage de moteur qui est incrémentée à des intervalles d'une durée prédéterminée est supérieure à une valeur maximum.

6. Dispositif de commande d'injection de carburant selon la revendication 4, **caractérisé en ce que** l'établissement de la soupape de décharge (126) à l'état ouvert par le moyen d'établissement de redémarrage (12, 504) est commandé à des intervalles d'une durée prédéterminée.

7. Dispositif de commande d'injection de carburant selon la revendication 1, **caractérisé en ce que** l'interdiction de l'établissement de la soupape de décharge (126) à l'état fermé par le quatrième moyen (12, 432, 434) est commandée à chaque fois qu'un signal d'impulsion provenant de l'unité de détection d'angle de rotation (106) est appliqué à une unité de commande électronique (12).

8. Dispositif de commande d'injection de carburant selon la revendication 1, **caractérisé en ce que** ladite unité de détection d'angle de rotation (106) comprend une bobine de détection (100) et un rotor (94), ledit rotor comprenant une pluralité de parties dentées (96) et une pluralité de parties découpées (98) sur une périphérie extérieure du rotor.

9. Dispositif de commande d'injection de carburant selon la revendication 1, **caractérisé en ce que** ladite soupape de décharge (126) est une soupape électromagnétique qui est disposée dans la pompe d'injection de carburant et qui est électriquement établie à l'état ouvert ou à l'état fermé par une unité de commande électronique (12).

10. Dispositif de commande d'injection de carburant d'un moteur diesel qui comprend : une soupape de décharge (126) destinée à ouvrir ou à fermer une chambre à haute pression d'injection de carburant, une unité de détection d'angle (106) destinée à détecter un angle de rotation d'un vilebrequin du moteur, un premier moyen (12, 642) destiné à établir la soupape de décharge dans un état fermé à chaque fois que l'angle de rotation détecté par l'unité de détection d'angle de rotation est égal à un angle de rotation de coupure de commande de décharge, un second moyen (12, 612, 624) destiné à établir la soupape de décharge dans un état ouvert lorsque l'angle de rotation détecté par l'unité d'angle de rotation est égal à un angle de rotation de fin d'injection de carburant et un troisième moyen (12, 616, 618) destiné à empêcher l'établissement de la soupape de décharge dans l'état ouvert par le second moyen lorsqu'un régime du moteur pendant une condition de démarrage du moteur est inférieur à une valeur de référence,
**caractérisé en ce que** ledit dispositif comprend un moyen de calcul du régime du moteur temporaire (12, 626, 708) destiné à calculer un régime du moteur temporaire sur la base d'un régime du moteur lié à un angle de rotation prédéterminé du vilebrequin, avant l'établissement de la soupape de décharge (126) à l'état ouvert par le second moyen (12, 612, 624), lorsque. la soupape de décharge est établie à l'état fermé par le premier moyen (12, 642) pendant une période allant du début du démarrage du moteur au début du calcul du régime du moteur,
**en ce que**, lorsque le régime du moteur temporaire est calculé par le moyen de calcul de régime du moteur temporaire (12, 626, 708) le troisième moyen (12, 616, 618) effectue une détermination de ce que l'établissement de la soupape de décharge à l'état ouvert est interdit ou permis, sur la base du régime du moteur temporaire.
